(19)

Europäisches
Patentamt
European
Patent Office
Office européen
des brevets

(11)  **EP 3 271 696 B1**

(12)  **EUROPEAN PATENT SPECIFICATION**

(45) Date of publication and mention
of the grant of the patent:
**15.01.2020  Bulletin 2020/03**

(21) Application number: **16764329.5**

(22) Date of filing: **23.02.2016**

(51) Int Cl.:
*G01J 5/10* (2006.01)　　*H01L 31/0232* (2014.01)
*G01N 21/35* (2014.01)　　*G01J 5/00* (2006.01)
*G01N 21/3504* (2014.01)　　*H04N 5/33* (2006.01)

(86) International application number:
**PCT/IL2016/050204**

(87) International publication number:
**WO 2016/147169 (22.09.2016 Gazette 2016/38)**

(54) **SINGLE DEVICE FOR GAS AND FLAME DETECTION, IMAGING AND MEASUREMENT**

EINZELVORRICHTUNG FÜR GAS- UND FLAMMENDETEKTION, -ABBILDUNG UND -MESSUNG

DISPOSITIF UNIQUE POUR DÉTECTION, IMAGERIE ET MESURE DE GAZ ET DE FLAMME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **19.03.2015  US 201562135183 P
30.12.2015  US 201514983570**

(43) Date of publication of application:
**24.01.2018  Bulletin 2018/04**

(60) Divisional application:
**19202885.0**

(73) Proprietor: **CI Systems (Israel) LTD.
10551 Migdal Ha'Emek (IL)**

(72) Inventors:
• **CABIB, Dario
3657600 Timrat (IL)**

• **LAVI, Moshe
3600100 Nofit (IL)**
• **GIL, Amir
3607101 Kiryat Tivon (IL)**
• **SINGHER, Liviu
36066 Kiryat Tivon (IL)**

(74) Representative: **Kancelaria Eupatent.pl Sp. z.o.o
Ul. Kilinskiego 185
90-348 Lodz (PL)**

(56) References cited:
**EP-A1- 0 973 019　　US-A1- 2001 045 516
US-A1- 2004 108 564　　US-A1- 2005 156 111
US-A1- 2006 208 190　　US-A1- 2010 019 154
US-B1- 8 124 936**

**Description**

CROSS-REFERENCE TO RELATED APPLICATIONS

This application is a Continuation-in-part of U.S. Patent Application Serial No. 14/983.570, filed on December 30, 2015. This application claims priority from U.S. Provisional Patent Application No. 62/135,183, filed March 19, 2015. This application is related to U.S. Patent Application Serial No. 14/949,906 and U.S. Patent Application Serial No. 14/949,909, both filed on November 24, 2015.

TECHNICAL FIELD

The present invention relates to the detection, imaging and measurement of infrared radiation.

BACKGROUND OF THE INVENTION

Industrial plants dealing with mining, production or storage of explosive or flammable gases and vapors such as hydrocarbons (methane, ethane, etc.), fuels of different kinds, hydrogen, acetylene, etc. are in constant danger of accidents. Explosions may cause fires, thus there is inherent danger from both the explosion itself and from the consequent ensuing fires, In addition, fires may result from a plethora of diverse causes, and when occurring in such plants, such fires may themselves cause explosions. The dangers are to both personnel and equipment. and the resulting damages may be in the worst cases loss of human lives and large financial losses to the owners of the plants.

Additionally, the release of the gases in question has a negative impact on the environment. As a result, regulatory laws have been introduced around the world to impose monitoring standards and heavy fines to companies that do not show due diligence in early detection of fires and prevention of inordinate releases of such materials.

The likelihood of explosions increases, up to a point, with increasing gas concentrations. Accordingly, over the past decades a large number of gas concentration measuring devices and fire detection instrumentation has been developed and used in mining, production and storage plants. Until recently only local detectors (for gases) or non-imaging IR and UV detectors (for flames) have been deployed. A gas detector of this type can easily miss the target gas if the gas cloud is present but does not physically meet the position of the detector (or path in case of cloud movement). This is due to the use of contact methods, such as chemical reactions with the gas. In the case of fire detection, the monitor is based on a single detector which does not provide an image of the field (i.e., scene) being monitored. Therefore, the monitor cannot provide the necessary information on the location and size of the fire.

Current industry instrumentation does not allow for the detection, identification, and location of the concentration, size and prognosis information of explosive gas or vapor clouds and flames due to incipient fires. Accordingly, current instrumentation cannot meet the additional requirements of being operable from a distance, in harsh environments, usually outdoors, and with minimal false alarms due to signals from other possible infrared sources, such as sun reflections, welding arcs, halogen lamps etc. The alarms provided by such detection instruments may be effectively used by the plant operators to prevent damages and losses of human lives through a number of possible actions. An example of such actions may be partial or total plant shut down, the request of fire department involvement, or other preventive or corrective action.

An example of a gas detection and imaging system is disclosed in US 2005/0156111 of Racca, et al. The imaging system includes a bi-spectral selector coupled to an infrared imager (i.e., detector array). The bi-spectral selector includes an arrangement of mirrors designed to split incoming scene radiation into two beams, with each beam directed to a respective optical assembly. The optical assemblies collimate each of the beams, and the collimated beams each impinge on a respective narrow band filter before impinging on separate halves of the detector array.

Another example of a gas detection and imaging system is disclosed in US 2006/0206190 to Wood. In some embodiments of the system, bandpass filters are used to detect gases. In other embodiments, the system includes a collimating lens, a beamsplitter, a pair of fixed mirrors, and a cylindrical focusing lens. The collimating lens collimates incoming radiation. The collimated radiation (i.e., beams) is split by the beamsplitter where some of the split beam traverses the mirrors before passing back through the beamsplitter and through the focusing lens. The system then performs interferometry to detect the presence of the gas.

A further example of a detection system is disclosed in US 8,124,936 to Lagna. The system includes stand-off chemical detector having an array of CCD radiation sensing elements in which some of the sensing elements are sensitive to radiation in one wavelength and other of the sensing elements are sensitive to radiation in another wavelength. A filtering arrangement may be used to extend the detection range to the non-visible IR range.

A further example of an imaging system is disclosed in EP 0973109 to Porter. The system simultaneously images radiation from a scene on two or more detector arrays. In some embodiments, the radiation imaged on one of the detector arrays is limited by a filter, while the radiation imaged on the other detector array is not filtered. The radiation imaged on both detector arrays is imaged separately via separate focusing lenses. In other embodiments, a mirror is used to split the incoming radiation.

However, in all of the example systems mentioned above, the numerical aperture of the system is either halved, resulting in reduced optical behavior, or only a single image is formed (as in Lagna).

Furthermore, such infrared imaging devices can be used to quantitatively measure the radiance of each pixel of a scene only if the environment radiation changes (due mainly to environment temperature changes) contributing to the detector signals, can be monitored and corrected for. This is due to the fact that a quantitative measurement of infrared radiation from a scene is based on a mathematical relation between the detector signal and the radiation to be measured. This relation depends on the environment state during the measurement, and therefore the quantitative scene measurement can be done only if the environment state, and how the environment state affects that relation, is known during the measurement. The environment radiation sensed by the detector elements originates mainly from the optics and enclosures of the imaging device (besides the scene pixel to be monitored), and is a direct function of the environment temperature. If this radiation changes in time, it causes a drift in the signal, which changes its relation to the corresponding scene radiation to be measured and introduces inaccuracy.

This resulting inaccuracy prevents the use of such devices, especially in situations where they have to provide quantitative information on the gas to be monitored and have to be used unattended for monitoring purposes over extended periods of time, such as, for example, for the monitoring of a scene in industrial installations and facilities.

One known method for performing drift corrections is referred to as Non-Uniformity Correction (NUC). NUC corrects for detector electronic offset and partially corrects for detector case temperature drifts by the frequent use of an opening and closing shutter which is provided by the camera manufacturer. This NUC procedure is well known and widely employed in instruments based on microbolometer detectors. The shutter used for NUC is a moving part and therefore it is desirable to reduce the number of openings and closings of such a component when monitoring for gas leakages in large installations, requiring the instrument to be used twenty-four hours a day for several years without maintenance or recalibration. Frequent opening and closing of the shutter (which is usually done every few minutes or hours) requires high maintenance expenses.

To reduce the amount of shutter operations when using NUC techniques, methods for correcting for signal drift due to detector case temperature changes occurring between successive shutter openings have been developed by detector manufacturers, referred to as blind pixel methods. Known blind pixel methods rely on several elements of the detector array of the imaging device being exposed only to a blackbody radiation source placed in the detector case, and not to the scene radiation (i.e. being blind to the scene). However, such methods can only account and compensate for environmental temperature changes originating near and from the enclosure of the detector array itself, and not for changes originating near the optics or the enclosures of the imaging device. This is because in general there are gradients of temperature between the detector case and the rest of the optics and device enclosure. Therefore, known blind pixel methods may not satisfactorily compensate for environment radiation changes in imaging devices with large and/or complex optics, such as, for example, optics having an intermediate focal plane requiring at least two optical lenses, and optics having reflective and/or refractive surfaces for directing radiation in part through an optical lens towards the detector and/or in part directly towards the detector, as will be described below.

## SUMMARY OF THE INVENTION

The present invention is directed to passive electro-optical instruments (i.e., devices), capable of detecting and imaging a cloud of hydrocarbon gas and/or a flame of burning material from a distance, distinguishing between the two types of materials, and for correcting for signal drift as a result of the changing environment.

The detection, imaging and measurement of hydrocarbon gas clouds and flames with the same device has a definite cost advantage over other methods using dedicated infrared imagers for each of the two types of events. This solution requires fewer instruments, fewer installations, and less maintenance, and therefore reduced costs. Infrared radiation imaging and measurement technology combined in a single device is a suitable candidate for such an endeavor, since both hydrocarbon gases and flames have spectral absorption and emission signatures in the appropriate range, as will be discussed in subsequent sections of this disclosure.

A key advantage of the devices of the present disclosure, among other advantages, is that they provide the capability of event diagnosis without human intervention, so in addition to the above application it can be used as a fixed installation for continuous monitoring and as a handheld instrument for periodic plant maintenance and repair. The invention is defined by independent claim 1. Preferred embodiments are defined in the dependent claims.

According to an embodiment of the teachings of the present description there is provided, a device for imaging radiation from a scene, the radiation including at least a separate first and second wavelength region, the scene including at least one of a first and second material, the first material having spectral characteristics in the first wavelength region and the second material having spectral characteristics in the second wavelength region, the device comprising: (a) a detector of the radiation from the scene, the detector including a first and second plurality of detector elements and a filtering arrangement integrated thereon, the filtering arrangement including a first and second plurality of filtering elements, each of the first and second plurality of filtering elements having a respective pass band and stop band, the first wavelength region being within the pass bands of the first plurality of filtering elements and the stop bands of the second plurality of filtering elements and, the second wavelength region being within the pass bands of the second plurality of filtering elements and the stop bands of the first plurality of filtering elements; (b) an image forming optical component for forming an image of the scene on the detector, the radiation being imaged simultaneously, through an optical f-number of less than approximately 1.5, onto the first and second plurality of detector elements, the imaged radiation on the first plurality of detector elements including radiation in the first wavelength region and the imaged radiation on the second plurality of detector elements including radiation in the second wavelength region; and (c) electronic circuitry electronically coupled to the detector, the electronic circuitry configured to: (i) produce a pixel signal from each respective detector element, each of the pixel signals including information associated with the absorption or emission of radiation in one of the respective wavelength regions by each of the first and second materials, and (ii) determine the presence or absence of the first and second materials based on the produced pixel signals.

Optionally, the filtering arrangement is integrated by depositing a substrate on a surface of the detector, the substrate including the first and second plurality of filtering elements.

Optionally, the filtering arrangement is integrated by doping the first and second plurality of detector elements, such that the first plurality of detector elements is sensitive to radiation in the first wavelength region, and the second plurality of detector elements is sensitive to radiation in the second wavelength region.

Optionally, the first wavelength region includes radiation wavelengths between 3.15 and 3.5 microns, and the second wavelength region includes radiation wavelengths between 4.3 and 4.6 microns.

Optionally, the first and second plurality of filter elements are arranged such that each filter element of the first plurality of filter elements is adjacent to at least one respective filter element of the second plurality of filter elements.

Optionally, the detector includes separate first and second contiguous detector regions, the first detector region including the first plurality of detector elements, and the second detector region including the second plurality of detector elements.

Optionally, each filtering element of the first plurality of filtering elements is aligned with a respective detector element of the first plurality of detector elements and, each filtering element of the second plurality of filtering elements is aligned with a respective detector element of the second plurality of detector elements.

Optionally, the device further comprises; (d) a radiation directing arrangement for directing radiation from a field of view of the scene through the image forming optical component onto the detector, such that the radiation is separately imaged onto the first and second plurality of detector elements through the optical f-number of less than approximately 1.5.

Optionally, the radiation directing arrangement includes a reflective surface positioned substantially parallel to the optical axis of the device.

Optionally, the radiation directing arrangement includes first and second substantially wedge-shaped components.

Optionally, the detector includes a third plurality of detector elements, and the device further comprises: (d) a radiation source different from the scene, and the image forming optical component projects radiation from the radiation source onto the third plurality of detector elements, and wherein the electronic circuitry is further configured to: (iii) produce, for each detector element of the third plurality of detector elements, a second pixel signal from the radiation source projected by the image forming optical component onto the third plurality of detector elements, and (iv) modify each respective pixel signal, produced from the first and second plurality of detector elements, according to a predetermined function to produce a respective modified pixel signal, the predetermined function defining a relationship between a change in a respective second pixel signal and a change in the respective pixel signal, produced from the first and second plurality of detector elements, induced by a changing environment feature.

There is also provided according to an embodiment of the teachings of the present description, a device for imaging radiation from a scene, the radiation including at least a separate first and second wavelength region, the scene including at least one of a first and second material, the first material having spectral characteristics in the first wavelength region and the second material having spectral characteristics in the second wavelength region, the device comprising: (a) a detector of the radiation from the scene, the detector including a plurality of detector elements, each detector element including a first and second detector element region, each of the first detector element regions being sensitive to radiation in the first wavelength region and each of the second detector element regions being sensitive to radiation in the second wavelength region; (b) an image forming optical component for forming an image of the scene on the detector, the radiation being imaged simultaneously, through an optical f-number of less than approximately 1.5, onto plurality of detector elements, such that the imaged radiation on each of the first detector element regions includes radiation in the first wavelength region and the imaged radiation on each of the second detector element regions includes radiation in the second wavelength region; and (c) an electronic circuitry arrangement electronically coupled to the detector, the electronic circuitry arrangement configured to: (i) produce a pixel signal from each respective detector element region, each of the pixel signals including information associated with the absorption or emission of radiation in one of the respective wavelength regions by each of the first and second materials, and (ii) determine the presence or absence of the first and second materials based on the produced pixel signals.

Optionally, the electronic circuitry arrangement includes a first and second electronic circuits, the first electronic circuit being electronically coupled to the first detector element regions, and the second electronic circuit being electronically coupled to the second detector element regions.

Optionally, the first electronic circuit is configured to produce a pixel signal from each respective first detector element region, and the second electronic circuit is configured to produce a pixel signal from each respective second detector element region.

Optionally, the first wavelength region includes radiation wavelengths between 3.15 and 3.5 microns, and the second wavelength region includes radiation wavelengths between 4.3 and 4.6 microns.

Optionally, the detector includes a second plurality of detector elements, and the device further comprises: (d) a radiation source different from the scene, and the image forming optical component projects radiation from the radiation source onto the second plurality of detector elements, and wherein the electronic circuitry arrangement is further configured to: (iii) produce, for each detector element of the second plurality of detector elements, a second pixel signal from the radiation source projected by the image forming optical component onto the second plurality of detector elements, and (iv) modify each respective pixel signal, produced from the first and second detector element regions, according to a predetermined function to produce a respective modified pixel signal, the predetermined function defining a relationship between a change in the respective second pixel signal and a change in the respective pixel signal, produced from the first and second detector element regions, induced by a changing environment feature.

There is also provided according to an embodiment of the teachings of the present description, a device for imaging radiation from a scene, the radiation including at least a separate first and second wavelength region, the scene including at least one of a first and second material, the first material having spectral characteristics in the first wavelength region and the second material having spectral characteristics in the second wavelength region, the device comprising: (a) a detector of the radiation from the scene; (b) a static filtering arrangement including a first and second filter, each of the filters having a respective pass band and a stop band, the first wavelength region being within the pass band of the first filter and the stop band of the second filter, and the second wavelength region being within the pass band of the second filter and the stop band of the first filter; (c) an image forming optical component for forming an image of the scene on the detector, the radiation being imaged simultaneously, through an f-number of less than approximately 1.5, onto a first and second subset of pixels of the detector, the imaged radiation on the first subset of detector pixels including radiation in the first wavelength region and the imaged radiation on the second subset of detector pixels including radiation in the second wavelength region; and (d) electronic circuitry electronically coupled to the detector, the electronic circuitry configured to: (i) produce a pixel signal from each respective detector pixel, each of the pixel signals including information associated with the absorption or emission of radiation in one of the respective wavelength regions by each of the first and second materials, and (ii) determine the presence or absence of the first and second materials based on the produced pixel signals.

Optionally, the first wavelength region includes radiation wavelengths between 3.15 and 3.5 microns, and the second wavelength region includes radiation wavelengths between 4.3 and 4.6 microns.

Optionally, the detector includes a separate first and second detector region, the first detector region including the first subset of detector pixels, and the second detector region including the second subset of detector pixels, and the device further comprises: (e) a radiation directing arrangement for directing radiation from a field of view of the scene through the image forming optical component onto the detector, such that the radiation is separately imaged onto the first and second detector regions through the f-number of less than approximately 1.5.

Optionally, the radiation directing arrangement includes a reflective surface positioned substantially parallel to the optical axis of the device.

Optionally, the first filter is disposed proximate to the first detector region and the second filter is disposed proximate to the second detector region.

Optionally, the first filter is a first plate interposed between the first detector region and the image forming optical component, and the second filter is a second plate interposed between the second detector region and the image forming optical component.

Optionally, the first and second wavelength regions are in the mid wave infrared region of the electromagnetic spectrum, and the detector is sensitive to radiation in the first and second wavelength regions.

Optionally, the radiation directing arrangement includes first and second substantially wedge-shaped components.

Optionally, the first filter is disposed on one of a first surface or a second surface of the first wedge-shaped component, and the second filter is disposed on one of a first surface or a second surface of the second wedge-shaped component.

Optionally, the first surface of the first wedge-shaped component is a closest surface of the first wedge-shaped component to the image forming optical component, and the first surface of the second wedge-shaped component is a closest surface of the second wedge-shaped component to the image forming optical component, and the second surface of the first wedge-shaped component is a closest surface of the first wedge-shaped component to the scene, and the second surface of the second wedge-shaped component is a closest surface of the second wedge-shaped component to the scene.

Optionally, each of the first and second filters includes a plurality of filter elements, the plurality of filter elements being arranged such that each filter element of the plurality of filter elements of the first filter is adjacent to at least one respective filter element of the plurality of filter elements of the second filter.

Optionally, an indication of the presence or absence of the first and second materials is based on the difference between the pixel signals produced from the first and second subsets of pixels of the detector.

Optionally, the first material is a hydrocarbon gas cloud and the second material is a flame.

Optionally, the electronic circuitry is further configured to: (iii) if the hydrocarbon gas cloud is present, provide a measurement of the path concentration distribution of the hydrocarbon gas cloud based on at least a portion of the pixel signals.

There is also provided according to an embodiment of the teachings of the present description, a device for imaging radiation from a scene, the radiation including at least a separate first and second wavelength region, the scene including at least one of a first and second material, the first material having spectral characteristics in the first wavelength region and the second material having spectral characteristics in the second wavelength region, the device comprising; (a) a detector of the radiation from the scene; (b) a filtering arrangement including a first and second filter, each of the filters having a respective pass band and a stop band, the first wavelength region being within the pass band of the first filter and the stop band of the second filter, and the second wavelength region being within the pass band of the second filter and the stop band of the first filter; (c) an image forming optical component for forming an image of the scene on the detector through an f-number of less than approximately 1.5; (d) a mechanism for positioning the filtering arrangement relative to the image forming optical component, such that, the radiation is alternately imaged through each of the first and second filters onto the same respective pixels of the detector; and (e) electronic circuitry electronically coupled to the detector, the electronic circuitry configured to: (i) produce, from each detector pixel, a respective pixel signal for each alternation of the radiation imaged through the first and second filters, the pixel signals including information associated with the absorption or emission of radiation in one of the respective wavelength regions by each of the first and second materials, and (ii) determine the presence or absence of the first and second materials based on the produced pixel signals.

Optionally, the first wavelength region includes radiation wavelengths between 3.15 and 3.5 microns, and the second wavelength region includes radiation wavelengths between 4.3 and 4.6 microns.

Optionally, each of the first and second filters includes a plurality of filter elements, the plurality of filter elements being arranged such that each filter element of the plurality of filter elements of the first filter is adjacent to at least one respective filter element of the plurality of filter elements of the second filter.

Optionally, the first material is a hydrocarbon gas cloud and the second material is a flame, and wherein the electronic circuitry is further configured to; (iii) if the hydrocarbon gas cloud is present, provide a measurement of the path concentration distribution of the hydrocarbon gas cloud based on at least a portion of the pixel signals.

Optionally, the first and second wavelength regions are in the mid wave infrared region of the electromagnetic spectrum, and the detector is sensitive to radiation in the first and second wavelength regions.

Optionally, the indication of the presence or absence of the first and second materials is based on, for each respective pixel of the scene, the averaging of a minority subset of pixel signals produced from the radiation imaged through the first filter, and the averaging of a minority subset of pixel signals produced from the radiation imaged through the second filter.

There is also provided according to an embodiment of the teachings of the present description, a method for reducing drift induced by at least one changing environment feature when imaging radiation from a scene, the radiation including at least a separate first and second wavelength region, the method comprising: (a) focusing radiation from the scene through an image forming optical component onto a first region of a detector to produce at least a first pixel signal, the image forming optical component being positioned within a first enclosure volume; (b) positioning a radiation source proximate to the image forming optical component; (c) projecting radiation from the radiation source onto a second region of the detector to produce a second pixel signal, the first and second regions of the detector being non-overlapping regions and, the radiation from the radiation source being continuously projected onto the second region of the detector over the duration for which the radiation from the scene is focused onto the first region of the detector; and (d) modifying the first pixel signal based in part on a predetermined function to produce a modified pixel signal, the predetermined function defining a relationship between a change in the second pixel signal and a change in the first pixel signal induced by the at least one changing environment feature.

Optionally, the method further comprises: (e) determining the change in the first pixel signal induced by the changing environment feature based on the predetermined function, and wherein the modified pixel signal is produced by subtracting the determined change in the first pixel signal from the first pixel signal.

Optionally, the predetermined function is based on the correlation between the change in the second pixel signal and the change in the first pixel signal induced by the changing environment feature.

Optionally, the method further comprises: (e) determining the correlation, and the determining of the correlation is performed prior to performing (a).

Optionally, the radiation source is a blackbody radiation source, and the detector and the image forming optical component are positioned within a chamber having an adjustable chamber temperature, and a verification of the correlation is determined by: (i) forming a first set of signals provided by each pixel of the first detector region when imaging the blackbody radiation source at a constant temperature and at a range of different chamber temperatures: (ii) forming a second set of signals provided by the pixels of the second detector region at each of the different chamber temperatures; and (iii) verifying a correlation between the first and second sets of signals.

Optionally, the radiation source is a blackbody radiation source, and the detector and the image forming optical component are positioned within a chamber having an adjustable chamber temperature, and a determination of the correlation includes: (i) measuring a first reading of the first pixel signal at a first chamber temperature and measuring a subsequent reading of the first pixel signal at a subsequent chamber temperature; (ii) subtracting the first reading of the first pixel signal from the subsequent reading of the first pixel signal to define a first set; and (iii) measuring a first reading of the second pixel signal at the first chamber temperature, measuring a subsequent reading of the second pixel signal at the subsequent chamber temperature and subtracting the first reading from the second reading to define a second set.

Optionally, the modifying of the first pixel signal includes: (i) measuring a first reading of the first pixel signal at a first time instance and measuring a subsequent reading of the first pixel signal at a subsequent time instance; (ii) measuring a first reading of the second pixel signal at the first time instance and measuring a subsequent reading of the second pixel signal at the subsequent time instance; and (iii) subtracting the first reading of the blind pixel signal from the subsequent reading of the blind pixel signal to define a third set.

Optionally, wherein the modifying of the first pixel signal further includes: (iv) modifying the subsequent reading of the first pixel signal based on the third set in accordance with a correlation between the first and second sets.

Optionally, the determination of the correlation further includes: (iv) displaying the first set as a function of the second set.

Optionally, the determination of the correlation further includes: (iv) displaying the first set as a function of a third set, the third set being defined by the first chamber temperature and the subsequent chamber temperatures.

Optionally, the at least one environment feature includes environment temperature.

Optionally, the method further comprises: (e) filtering the radiation from the scene with a filter, such that, the imaged radiation on the first region of the detector includes radiation in one of the respective wavelength regions.

Optionally, the method further comprises: (t) positioning the filter at an intermediate focal plane between the image forming optical component and a second optical component for directing radiation from the scene towards the detector.

Optionally, the radiation source is positioned within the first enclosure volume.

Optionally, the radiation source is positioned at an intermediate focal plane between the image forming optical component and a second optical component for directing radiation from the scene towards the detector.

There is also provided according to an embodiment of the teachings of the present description, a device for reducing drift induced by at least one changing environment feature when imaging radiation from a scene, the radiation including at least a separate first and second wavelength region, the device comprising: (a) a detector of the radiation from the scene and of radiation from the radiation source, the detector including a separate first and second detector region; (b) an optical system including an image forming optical component for continuously focusing the radiation from the scene and the radiation source onto the detector, the image forming optical component forming an image of the scene on the first detector region, through an optical f-number of less than approximately 1.5, and projecting radiation from the radiation source onto the second detector region, the optical system being positioned within a first enclosure volume; (c) a radiation source different from the scene, the radiation source being positioned proximate to the optical system; and (d) electronic circuitry electrically coupled to the detector configured to: (i) produce at least a first pixel signal from the imaged radiation on the first detector region; (ii) produce a second pixel signal from the radiation source projected by the image forming optical component onto the second detector region, and (iii) modify the first pixel signal according to a predetermined function to produce a modified pixel signal, the predetermined function defining a relationship between a change in the second pixel signal and a change in the first pixel signal induced by the at least one changing environment feature.

Optionally, the electronic circuitry is further configured to: (iv) determine the change in the first pixel signal induced by the at least one changing environment feature based on the predetermined function, and (v) subtract the determined change in the first pixel signal from the first pixel signal.

Optionally, the optical system further includes a second optical component and a mechanism for positioning the radiation source substantially at an intermediate focal plane, the intermediate focal plane being between the second optical component and the image forming optical component.

Optionally, the device further comprises: (e) a filter for filtering the radiation from the scene, such that, the imaged radiation on the first region of the detector includes radiation in one of the respective wavelength regions.

Optionally, the optical system further includes a second optical component and a mechanism for positioning the filter substantially at an intermediate focal plane, the intermediate focal plane being between the second optical component and the image forming optical component.

BRIEF DESCRIPTION OF THE DRAWINGS

The invention is herein described, by way of example only, with reference to the accompanying drawings, wherein;

FIG. 1 is a plot of the spectral absorptance of methane gas;

FIG. 2 is a plot of the spectral absorptance of ethane gas;

FIG. 3 is a plot of the spectral absorptance of propane gas;

FIG. 4 is a plot of the infrared emission spectra of flames of various burning gas and liquid fuels;

FIG. 5 is a plot of the infrared emission spectra of cardboard and wood;

FIG. 6 is a plot of the frequency content of a fuel flame;

FIG. 7 is a plot of the self-emission spectrum of a hydrogen flame;

FIG. 8 is a schematic side view illustrating a device for detecting and imaging radiation from a scene in two separate wavelength regions;

FIG. 9A is a schematic side view illustrating a device for detecting and imaging radiation from a scene in two separate wavelength regions using a checkerboard pattern filtering arrangement,

FIG. 9B is a schematic side view illustrating an alternate configuration of the device of FIG. 9A in which the detecting and imaging of radiation from the scene is accomplished with no moving parts;

FIG. 10 is a schematic representation of a checkerboard pattern filtering arrangement for performing detection and imaging of the radiation from the scene using the configurations of the device of FIGS. 9A and 9B;

FIG. 11 is a schematic representation of an alternate configuration of the checkerboard pattern filtering arrangement of FIG. 10, according to an embodiment of the invention;

FIGS. 12 and 13 show schematic representations of groups of detector pixels corresponding to a single scene pixel, according to an embodiment;

FIG. 14 is a schematic side view illustrating a device with a wedge configuration for detecting and imaging radiation from a scene in two separate wavelength regions without moving parts, according to an embodiment of the invention;

FIG. 15 is a schematic side view illustrating the traversal of incident rays from the scene and the scene background through the device of FIG. 14;

FIG. 16 is a schematic front view illustrating a detector and the resulting image formed on the detector, according to an embodiment of the invention;

FIG. 17 is a schematic side view illustrating a device with a mirror for detecting and imaging radiation from a scene in two separate wavelength regions without moving parts, according to an embodiment of the invention

FIGS. 18A and 18B are schematic side views illustrating filtering alternatives of the device of FIG. 14, according to embodiments of the invention;

FIGS. 19A and 19B are schematic side views illustrating filtering alternatives of the devices of FIGS. 14 and 17, according to embodiments;

FIG. 20 is a block diagram of image acquisition electronics coupled to a detector array, according to an embodiment;

FIG. 21A is an isometric exploded view illustrating a detector array with a filter substrate in a checkerboard pattern, according to an embodiment;

FIG. 21B is a top view corresponding to FIG. 21A;

FIGS. 21C and 21E are isometric exploded views illustrating a detector array with alternate pattern configurations of the filter substrate of FIGS. 21A and 21B;

FIGS. 21D and 21F are side views corresponding to FIGS. 21C and 21E, respectively;

FIGS. 22A-22C are schematic front views illustrating configurations of a detector having a first set of detector elements sensitive to a first wavelength region and a second set of detector elements sensitive to a second wavelength region, according to an embodiment;

FIG. 23 is a schematic front view illustrating a detector having an array of detector elements in which each detector element includes a first sub-element sensitive to a first wavelength region and a second sub-element sensitive to a second wavelength region, according to an embodiment;

FIG. 24 is a block diagram of two sets of image acquisition electronics coupled to the detector array of FIG. 23;

FIG. 25 is a schematic side view illustrating a device for drift correction according to an embodiment;

FIG. 26 is a schematic front view illustrating a detector array of the device of FIG. 25;

FIG. 27 is a schematic side view illustrating an alternative device for drift correction according to an embodiment of the invention;

FIG. 28A is a schematic front view illustrating a detector array of the device of FIG. 27;

FIG. 28B is a schematic front view illustrating blind pixels and imaged pixels according to an embodiment;

FIG. 29 is a flowchart for verifying a correlation according to an embodiment of the invention;

FIG. 30 is a flowchart for determining a correlation according to an embodiment;

FIG. 31 is flowchart for correcting for drift according to an embodiment;

FIGS. 32A and 32B show examples of plots used for performing steps of the flowchart of FIG. 29.

## DESCRIPTION OF THE PREFERRED EMBODIMENTS

The principles and operation of the device according to the present invention may be better understood with reference to the drawings and the accompanying description.

Before explaining at least one embodiment of the invention in detail, it is to be understood that the invention is not necessarily limited in its application to the details of construction and the arrangement of the components and/or methods set forth in the following description and/or illustrated in the drawings and/or the examples.

The present teachings relate to a device for detecting and imaging both a cloud of hydrocarbon gas and/or a flame of burning material. The device performs the detection and imaging from a distance and can distinguish between the two types of events (i.e. hydrocarbon gas and flame of burning material). The device also corrects for signal drift resulting from the changing environment around the device.

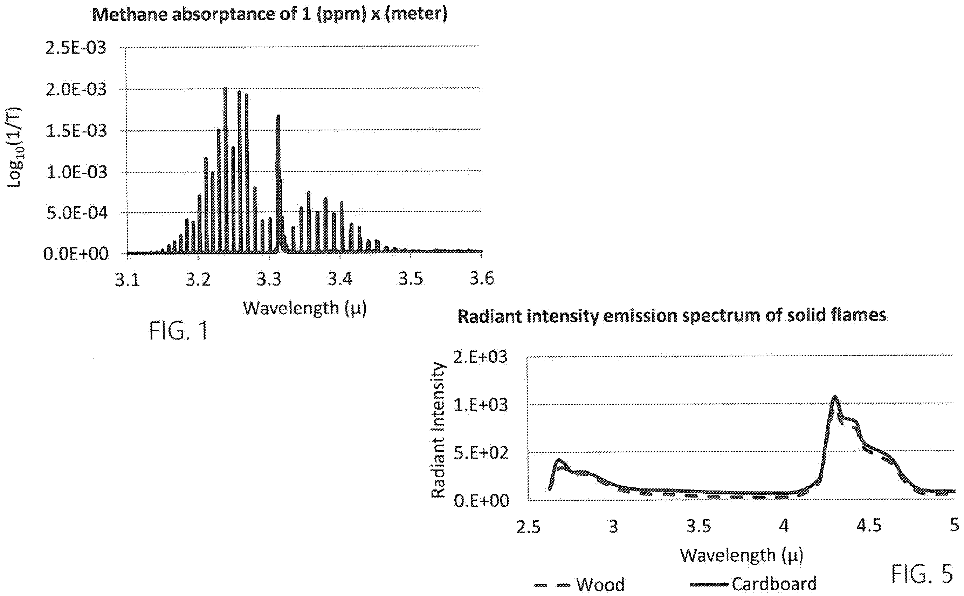

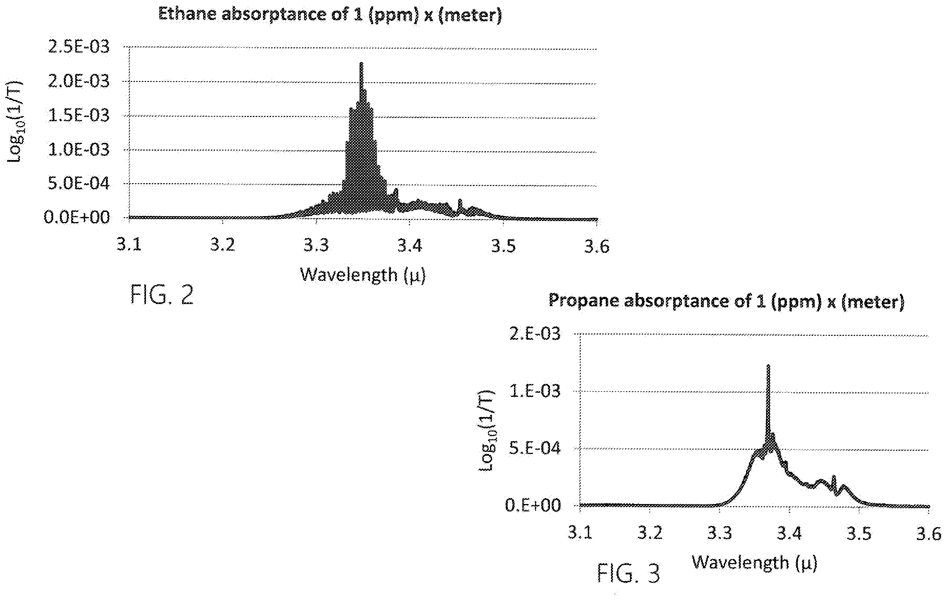

As examples, Figures 1-3 show the absorptance of 1 (ppm) x (meter) of methane (in units of $Log_{10}$ of inverse transmittance T), ethane and propane in the 2800 to 3200 wavenumbers ($cm^{-1}$) range (equivalent to 3.125 to 3.57 micron range).

Note that ethane and propane above and the other longer chain hydrocarbons butane, pentane and hexane, have absorptance between 3.3 and 3.5 microns while methane absorbs in a wider range, from 3.15 to 3.5 microns. Also note that none of such gases absorb infrared radiation in the 4.3 to 4.6 micron range, where flames emit large amount of radiation.

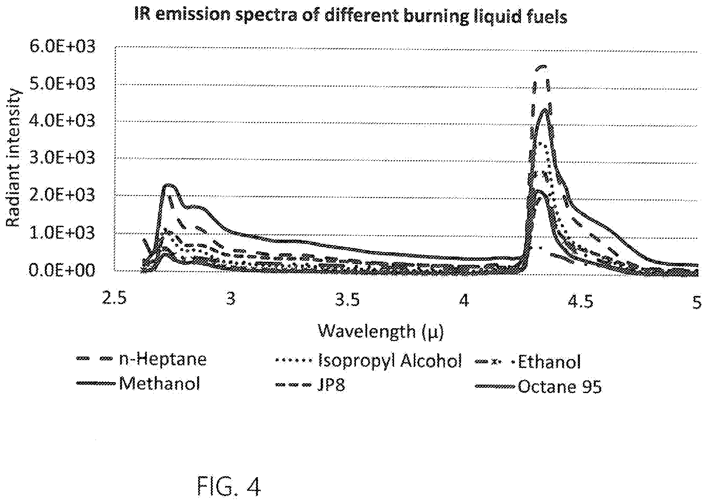

Typical emission spectra of flames due to various liquid fuels such as n-heptane, lead free, jet, diesel and others are shown in Figure 4. The feature around 2.7 microns is due to self-emission of hot water molecules in the flame, whereas the 4.3 to 4.7 micron feature is due to the hot $CO_2$ gas in the flame.

Similar infrared spectra of cardboard and wood are shown in Figure 5. The strong features due to water (near 2.7 microns, due to water and 4.5 microns, due to carbon dioxide) are similar to the flames of liquid fuels of Figure 4.

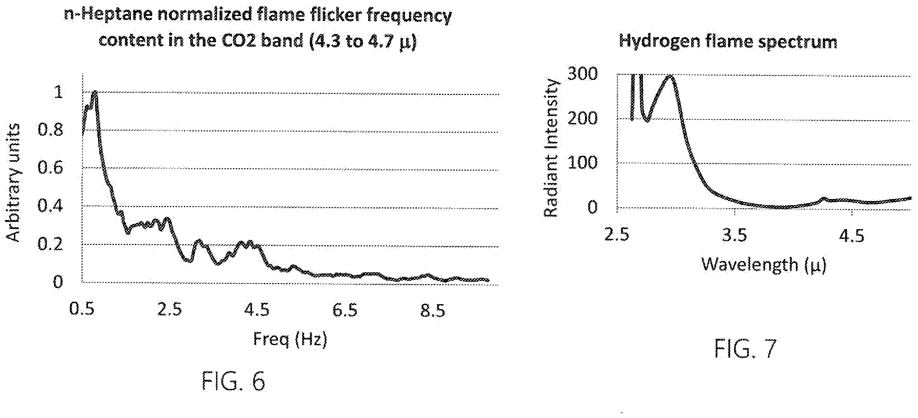

Such flames also flicker with characteristic frequencies. Radiometric measurements of n-heptane flame and other fuel flames as a function of time in both the 3 to 5 micron range and 8 to 14 micron range show that 90% of the total emitted energy varies with frequency components up to 5.5 Hz With a fast enough camera gathering this information, the probability of detection of a liquid fuel flame may be increased. Figure 6 shows the frequency content of n-Heptane flames as an example.

Note that in the 3 to 5 micron range the hydrogen flame emission is very small compared to the fuel flames emission. It is especially much smaller in the 4.3 to 4.6 micron range, where the flames due to liquid fuels show an especially large emission.

The absorptance data of the hydrocarbon gases are available to the public, for example, from Pacific Northwest National Laboratory in Richland Washington, USA, and are high resolution data. The flame emission spectra and time/frequency behavior have been measured by an SR 5000 N spectroradiometer of CI Systems, an instrument capable of measuring self-emission spectra of objects, calibrated in units of spectral radiance (Watts/((steradian) x ($cm^2$) x ($\mu$)) or spectral radiant intensity in Watts/((steradian) x ($\mu$)).

For the purpose of the present disclosure, it is useful to summarize the spectral data presented in Figures 1-7, as will described below.

Hydrocarbon gas absorption spectrum has a significant feature between 3.15 and 3.5 microns in methane and between 3.3 and 3.5 microns in the others. None of these gases have absorption in the 4.3 to 4.6 micron range, where burning flames (except hydrogen) have a strong self-emission feature. The flames, represented by n-heptane in Figure 6 as an example, show a time behavior of the infrared emission containing frequency components up to 5.5 Hz.

The device of the present disclosure is applicable for use in industrial locations, and is of particular value for both in-door and out-door use, and to provide an alarm in a plant when an explosive gas may be found in above than dangerous amounts, or when a fire has broken out in a space within the field of view of the device. The device is preferably based on an imaging camera (i.e., detector comprised of an array of detector elements) sensitive in the 1 to 4.5 micron spectral range, where both hydrocarbon gases and flames have strong spectral absorption or emission features. The 1 to 4.5 micron spectral range includes portions of the Near Infrared (NIR), Short-Wave Infrared (SWIR), and Mid-Wave Infrared (MWIR) regions of the electromagnetic spectrum. As will be further discussed, the detector array may also be sensitive to radiation in the Long-Wave Infrared (LWIR) region of the electromagnetic spectrum. Elements of the device include the optics to collect this IR radiation from the scene, a number of alternative spectral IR radiation filtering methods, and suitable algorithms especially designed to extract the information needed for detection, real-time imaging and event identification from the resulting pixel signals.

1. General elements of the device of the present disclosure:

The central element is a camera (i.e., detector array) sensitive to infrared radiation in the spectral range preferably between 3 and 4.6 microns is built with collection optics to receive such radiation from a scene and re-image the radiation on the camera through two band pass filters, one covering the range 3.15 and 3.5 microns and one covering the range 4.3 to 4.6 microns. It is well known in the art that a gas cloud interposed between a background and such a camera may be detected and imaged, and its path concentration measured (in units of $(ppm_{volume})$ x (meter)), provided the background temperature is different than the cloud temperature, and the signals produced from the detector array are compared through a so-called in-band filter (transmitting radiation in the absorption wavelength range of the gas, in our case 3.15 to 3.5 microns) and the so-called out-of-band filter (transmitting radiation outside the absorption wavelength range of the gas): in this case the difference between the two signals is positive or negative depending on whether the temperature difference between background and cloud is negative or positive respectively. Analogously, from what is shown in Figure 4 above, the filter transmitting 4.3 to 4.6 micron radiation is in-band with respect to flames of burning fuels, methane, and solid materials, while the 3.15 to 3.5 filter is out-of-band with respect to the same flames (the signal will be higher in the former and smaller in the latter spectral range). In this way, if the camera pixels are exposed to both filters, either successively or simultaneously by using a split-image method described below, the detection and identification of hydrocarbon gases and flames can be achieved. The appropriate signal differences through the two filters for each pixel will provide an indication as to whether the device is exposed to a flame (large and positive) or to a hydrocarbon gas (much smaller and positive or negative according to the background-object temperature difference).

The following features are important in this invention for becoming used in practice, even though in principle are only optional.

The detector array used in the camera is preferably a PbSe (lead selenide) uncooled or thermoelectrically cooled instead of other more expensive cryogenically cooled detectors, such as InSb (indium antimonide) arrays, which are sensitive in the same spectral range. PbSe detectors are becoming available commercially today. For example, St. Johns Optical Systems in Sanford and Lake Mary, Florida, US, offers such detectors, developed by Northrop Grumman, also in the US. New Infrared Technologies (NIT), a company in Madrid, Spain offers a number of PbSe array detector models.

Alternatively, the detector array used in the camera may be a Quantum Well Infrared Photodetector (QWIP) type array. The use of such QWIP type arrays requires that the detector array be manufactured such that the resulting wavelength sensitivity is in the appropriate spectral range, as will be described in more detail below.

Time or frequency analysis of the signals, in addition to the in-band-out-of-band comparison may be used in the mathematical algorithms of the device for better distinction between a gas cloud and a flame event, and between a flame and other infrared sources, yielding lower false alarm rate. In fact, flames flicker at characteristic frequencies that may aid in their identification.

Such PbSe detector arrays are sensitive to radiation in the MWIR region of the electromagnetic spectrum. Alternatively, microbolometer type arrays may be used for sensitivity to radiation in the LWIR region of the electromagnetic spectrum.

2a. Gas measurement:

In the following section, it is shown how the $(ppm_{volume})$ x (meter) of the gas can be measured in a pixel successively exposed to the in-band and out-of-band wavelength range by measuring the radiance difference in these two ranges.

It has been well known for many years that it is possible to detect the presence of a gas in the air by measuring the infrared self-emission of the background of the gas cloud in two different wavelengths, one which is absorbed by the gas and one which is not, provided that the background and gas are not at the same temperature. The radiance difference R reaching the measuring instrument between the two wavelengths $w_0$ (not absorbed) and $w_G$ (absorbed by the gas), can be expressed in terms of the background radiance B, the gas temperature $T_G$ (usually equal to the air temperature, and we assume that it is known by measurement) and the gas transmittance $t_G$ at the absorbed wavelength as follows:

$$R = B - B \cdot t_G - (1 - t_G) \cdot Pl(T_G, w_G) = (1 - t_G) \cdot \{B - Pl(T_G, w_G)\} \qquad (1)$$

where $Pl(T_G, w_G)$ is the Planck function at temperature $T_G$ and wavelength $w_G$. Two simplifications are used in equation (1) which are not important for the sake of this explanation because the associated phenomena can both be calibrated out in the more general case: i) atmospheric transmittance is assumed to be 1, and ii) background radiance in and out of the gas absorption band are equal.

It is obvious from equation (1) that in the case that B is equal to $P1(T_G, w_G)$, the radiance difference R is equal to zero, irrespective of the value of $t_G$, and in this case no information can be inferred on the quantity $t_G$. However, if B is different than $P1(T_G, w_G)$, then equation (1) can be solved for $t_G$ as follows:

$$t_G = 1 - \frac{R}{B - Pl(T_G, w_G)} \qquad (2)$$

All parameters on the right hand side of equation (2) are known: B is known because it is measured in the non-absorbing wavelength $w_0$, or in the wavelength $w_G$ in the absence of gas, P1 is known because $T_G$ is measured and $w_G$ is known, and R is measured. Therefore, $t_G$ is known from equation (2). If the molecular absorptance, $A_G$, of the specific gas being monitored is known from the literature at $w_G$, then to gives a measure of the product of average gas volume concentration in the cloud, multiplied by the thickness of the cloud itself or the so called concentration times length (or path concentration) value of the cloud. In fact, by the Lambert-Beer law as follows:

$$t_G = e^{-n A_G l} \qquad (3)$$

where $l$ is the path length or thickness of the cloud and $n$ is the average volume concentration of the gas being measured in the cloud, both corresponding to a specific pixel being examined. Equation (3) can then be inverted to yield the value of the product $nl$ for the particular pixel in question:

$$nl = \frac{1}{A_G} \ln\left(\frac{1}{t_G}\right) \qquad (4)$$

If $t_G$ in (2) is measured to be less than 1, then $nl$ in (4) is finite and there is gas in the region of the pixel in question, in the amount $nl$ ($ppm_{volume}$) x (meter). If $t_G$ from (2) is equal to 1, then $nl = 0$ in (4), and there is no gas. Note that $t_G$ values less than 0 or larger than 1 are not physical, since $t_G$ is a transmittance and is therefore bounded between 0 and 1.

2b. Flame measurement:

In the case that a flame is present in a pixel of the scene instead of a gas cloud, the detector pixel signal $S_{flame}$ is nearly zero when exposed to filter $w_G$ and high when exposed to filter $w_0$. This is due to the definition of the band pass of the two filters **4a** and **4b** and to the shape of the flame emission spectra as shown in Figure 4. The difference of the signals measured through the two filters **4a** and **4b**, or simply the $w_0$ signal (from the filter **4b**), indicates the presence or absence of the flame in the corresponding scene pixel.

In the following sections, the various embodiments of a device will be presented with different optical and filtering configurations for achieving the gas concentration measurement and flame detection functionality previously discussed. It is noted that the optical components and filtering components of these embodiments are typically retained within an optical casing, filter casing or the like, which can be considered to be an enclosure volume, for maintaining the position and orientation of the optical and filtering components.

3a. Successive exposure to in-band and out-of-band filtering:

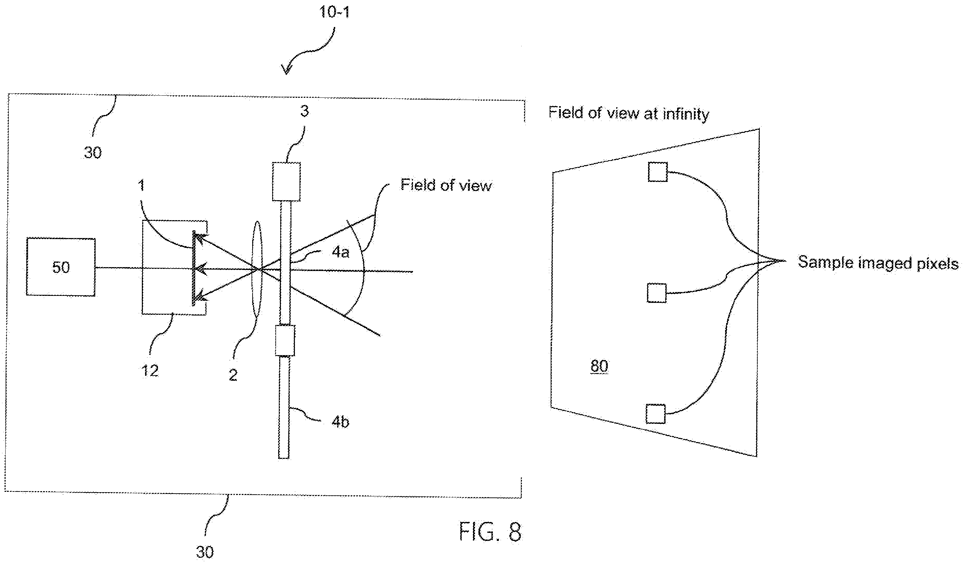

Figure 8 depicts an embodiment of a device **10-1** for detecting and imaging a cloud of hydrocarbon gas and a flame (i.e, a scene **80**). The device **10-1** includes an objective lens **2** (i.e., collection optics), positioned in front of a detector array **1** and a two-position filter holder or wheel **3** containing two filters (a first filter **4a** and a second filter **4b**), either in front of the objective lens **2** or between the objective lens **2** and the detector array **1**. The first filter **4a**, centered at $w_G$, is the in-band gas filter with a pass band between 3.15 and 3.5 microns or between 3.3 and 3.5 microns, or an optimized range between 3.15 and 3.5 microns. The second filter **4b**, centered at $w_0$, is the out-of-band gas filter with a pass band between 4.3 and 4.6 microns. The first filter **4a** (i.e., the filter centered at $w_G$) serves also as the out-of-band flame filter; while the second filter **4b** (i.e., the filter centered at $w_0$) serves also as the in-band flame filter. The filter holder or wheel alternates the two filters in the optical train, successively exposing the detector to the two different spectral ranges. Only the principal rays of the central, top and bottom pixels of the field of view (FOV) are shown. The filters **4a** and **4b** can be alternately placed between the lens **2** and the detector array **1** or between lenses in a multiple lens system design.

Note that the configuration of the device **10-1** as shown in Figure 8 can be preferably designed with a large numerical aperture of the objective lens **2** to exploit the best possible detector sensitivity (or low f-number, which is in general kept as close to 1 as possible, especially when using uncooled infrared detector arrays). Accordingly, it is preferred that the objective lens **2** of the device **10-1** has an f-number less than 1.5, and as close to 1 as possible (i.e., *f*/1.5 or less). A different configuration, using a dichroic beamsplitter to split the incoming beam into two beams to be filtered separately in the two wavelengths and two separate detectors can be used, but would be more expensive because of the additional detector cost. A further similar configuration using, besides the dichroic filter, an additional beam combiner and chopper may be used to limit the design to the single array detector, but in this case the chopper, needed to switch between the two wavelengths in synchronization with the detector frame capture rate, is a low reliability moving part. These last two configurations require more complicated optics to avoid decreasing the numerical aperture of the focusing optics at the detector and degrade the device sensitivity.

Note that a whole frame image of the scene **80** is exposed to only one of the two band pass filters **4a** and **4b** in succession. The information needed for gas or flame detection and imaging is achieved by the acquisition of at least two frames while the two filters **4a** and **4b** are successively positioned in the optical train by the rotation or translation of the holder or wheel **3**, in such synchronization that each frame is acquired through one of the filters (**4a** or **4b**). The sequence of exposure to the two filters **4a** and **4b** can be repeated as many times as desired, whether for averaging to achieve higher signal to noise ratio or for any other reason. The sequence may be composed also by several frames through one of the filters and then several frames through the other filter, instead of alternating frames.

Image acquisition electronics **50** are electrically coupled to the detector array **1** for processing output from the detector array **1** in order to generate and record signals corresponding to the detector elements (i.e., pixels) for imaging the scene **80**. The image acquisition electronics **50** includes electronic circuitry that produces corresponding pixel signals for each pixel associated with a detector element. As a result of the radiation being imaged on a multiple of detector elements, the image acquisition electronics **50** produces multiple corresponding pixel signals.

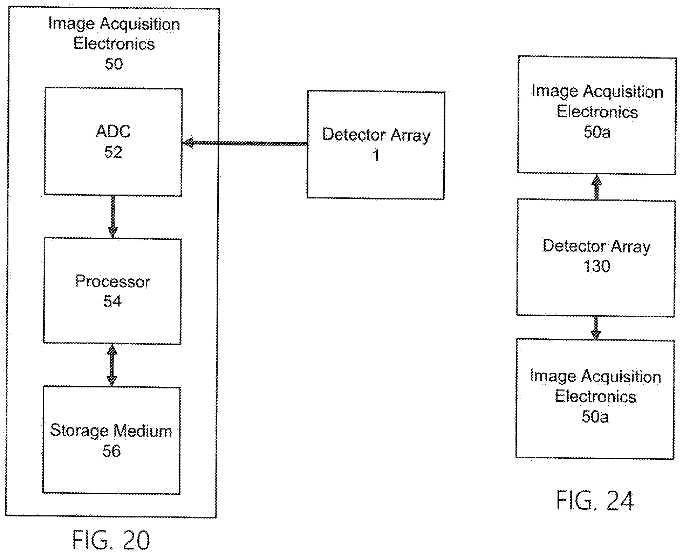

As shown in Figure 20, the image acquisition electronics **50** preferably includes an analog to digital conversion module (ADC) **52** electrically coupled to a processor **54**. The processor **54** is coupled to a storage medium **56**, such as a memory or the like. The ADC **52** converts analog voltage signals from the detector elements into digital signals. The processor **54** is configured to perform computations and algorithms for determining and/or indicating the presence or absence of the gas cloud path concentration distribution and/or flame, as well as imaging and measuring the gas cloud path concentration distribution and/or flame, as described in Sections 2a and 2b, based on the digital signals received from the ADC **52.**

The processor **54** can be any number of computer processors including, but not limited to, a microprocessor, an ASIC, a DSP, a state machine, and a microcontroller. Such processors include, or may be in communication with computer readable media, which stores program code or instruction sets that, when executed by the processor, cause the processor to perform actions. Types of computer readable media include, but are not limited to, electronic, optical, magnetic, or other storage or transmission devices capable of providing a processor with computer readable instructions.

The above mentioned components of the device **10-1** are positioned within a casing defined by internal walls **30** of the device **10-1**. Furthermore, the detector array **1** is preferably maintained within a detector case **12**, which in turn is positioned within the casing of the device **10-1**. Therefore, the internal walls **30** can be considered to be an enclosure volume for maintaining the position and orientation of the optical components and the detector array **1.**

3b, Exposure to in-band and out-of-band filtering by pattern filtering:

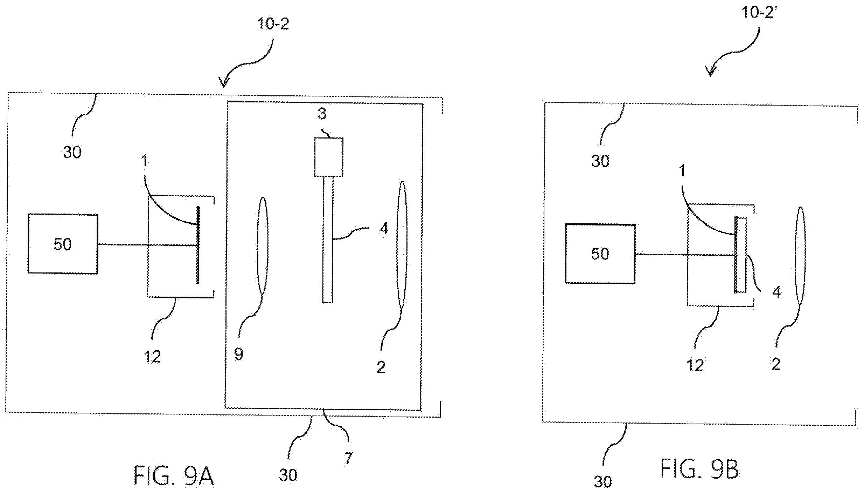

Figures 9A and 9B depict different configurations of a device **10-2** and **10-2'** which are alternative embodiments of the device **10-1**, which uses an alternate method of switching the exposure of the pixels of the detector to the two band pass filters centered at wavelengths $w_G$ and $w_0$ by "patterned filtering". This method may be implemented both statically (with some degree of loss of spatial resolution as explained below) or dynamically by movement of an optical filtering device. In the latter case the extent of movement is much smaller in amplitude than in the method of Section 3a, and can be performed with a simpler and cheaper motor, like a piezoelectric oscillator, instead of a rotary or translatory motor like in the previous section.

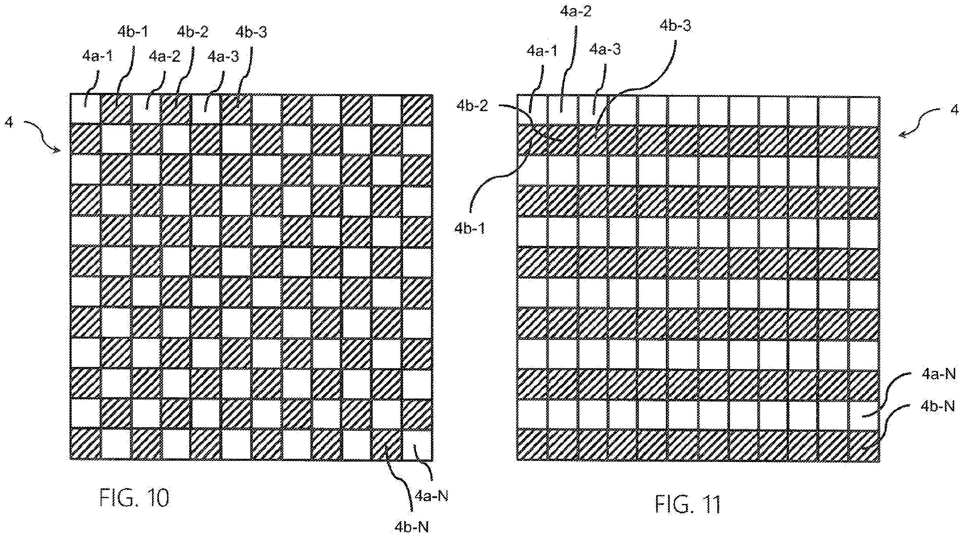

Referring to Figure 10, a checkerboard patterned filter **4** is implemented as the optical filtering device. The filter **4** can be used as a replacement for the two filters **4a** and **4b** of Figure 8, and may be placed in an intermediate focal plane (Figure 9A), an image plane of the scene, which is then re-imaged on the detector array, or on or as close as possible to the detector plane itself (Figure 9B). For the device **10-2**, the positioning of the checkerboard patterned filter **4** in an intermediate focal plane is depicted schematically in Figure 9A. The lens system of the device **10-2** includes the objective lens **2** and a re-imaging optical lens **9** (i.e., re-imaging optics), which together constitute collection optics **7.** For the device **10-2'**, the positioning of the checkerboard patterned filter **4** on the detector plane is depicted schematically in Figure 9B. The size of the squares on the board is optically matched to the size of the detector pixel, and each square is coated so that a particular square corresponds to one or the other of the filters **4a** and **4b.**

In Figure 10. the white squares (**4a-1**, **4a-2**, ..., **4a-N**) correspond to the first filter **4a** (i.e., the filter centered at $w_G$). Each white square (**4a-1**, **4a-2**, ..., **4a-N**) represents an individual element of the first filter **4a** (i.e., the filter centered at $w_G$). Similarly, the diagonally hatched squares (**4b-1**, **4b-2**, ..., **4b-N**) correspond to the second filter **4b** (i.e., the filter centered at $w_0$). Each diagonally hatched square represents an individual element of the second filter **4b** (i.e., the filter centered at $w_0$). The elements of the first and second filters **4a** and **4b** occupy the entire detector plane. The filter **4** is oscillated the length (i.e., amplitude) of a square along the horizontal or vertical direction relative to the detector plane. This successively exposes each detector pixel to one or the other of the band pass filters. The oscillation is performed in synchronization with the detector frame acquisition (i.e., the image acquisition electronics **50**) in order to provide the necessary scene information for performing the gas measurement and flame detection described in Sections 2a and 2b above, as carried out by the processor **56** of the image acquisition electronics **50.**

The filter combination shown in Figure 10 can be alternatively implemented with alternating rows or columns of the elements centered at $w_G$ and $w_0$ instead of a checkerboard, as in Figure 11. In the implementation of the filter **4** depicted in Figure 11, the movement of the filter **4** is in the vertical direction relative to the detector plane. The movement amplitude is equal to the length of one square, as previously described.

Note that many other similar configurations may be conceived, as for example the alternating stripes of Figure 11 arranged in columns instead of rows. In this case the movement is in the horizontal direction relative to the detector plane.

In the non-limiting example configurations illustrated in Figures 10 and 11, a total of 2N filter elements are depicted, with each of the first and second filters having N tilter elements.

A checkerboard or stripe configuration as in Figures 10 and 11 may be also static, either on an intermediate focal plane as mentioned above, or positioned very close to the detector plane, so that each square or row is exactly spatially registered with each pixel or row of pixels, respectively. As mentioned, such a configuration of the device **10-2'** is depicted schematically in Figure 9B. In this case the spatial resolution or field of view is decreased because one scene pixel is now made of at least two or four (or more) detector pixels. In order to obtain the information on the gas or flame presence, the signals of detector pixels corresponding to either of the band pass filters is summed together and averaged. The summing and averaging of the signals may be executed by the processor **54**. Accordingly, the entire scene **80** is imaged onto the detector **1.** The neighboring detector pixels produce signals, via the image acquisition electronics **50**, which correspond to the same portion of the scene **80** as filtered through each of the filters **4a** and **4b.**

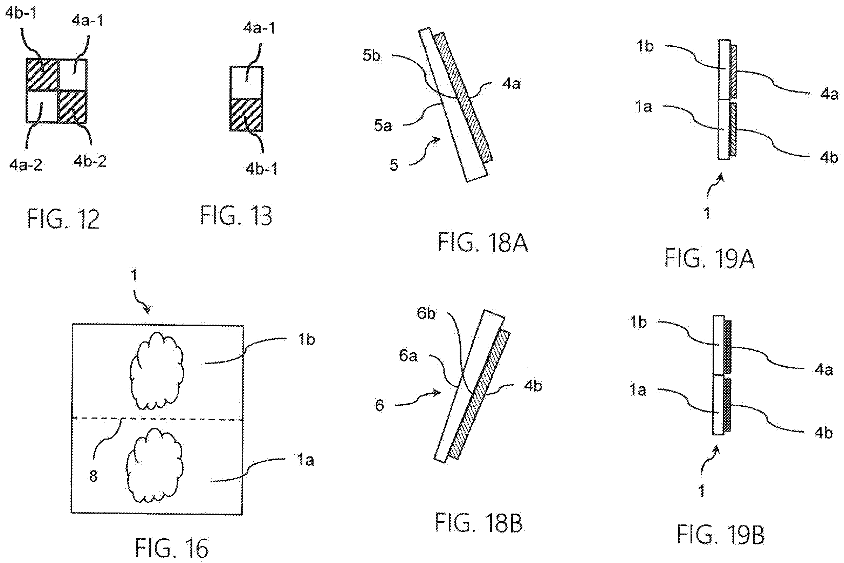

In Figure 12, a group of four detector pixels is shown which correspond to a single scene pixel. The signals of the pixels filtered through the white squares (i.e., **4a-1** and **4a-2** corresponding to the filter centered at $w_G$) are averaged to obtain the in-band signal of the scene pixel. Similarly, the signals of the pixels filtered through the diagonally hatched squares (i.e., **4b-1** and **4b-2** corresponding to the filter centered at $w_0$) are averaged to obtain the out-of-band signal of the scene pixel. In such a configuration, the number of scene pixels is reduced by a factor of two in both the vertical and horizontal directions relative to the detector plane.

In Figure 13, a group of two detector pixels is shown which correspond to a single scene pixel. In such a configuration, no averaging is necessary, and the number of scene pixels is reduced by a factor of two only in the vertical direction relative to the detector plane.

As should be understood, both checkerboard patterned filter implementations as depicted in Figures 10 and 11 can be used with each of the devices **10-2** and **10-2'**. depicted in Figures 9A and 9B, respectively. Furthermore, the objective lens 2 of the devices **10-2** and **10-2'** can be designed with a large numerical aperture (i.e., *f*/1.5 or less and as close as possible to *f/* 1) similar to the objective lens of the device **10-1**.

Similar to the device **10-1**, the components of the devices **10-2** and **10-2'** are positioned within a casing defined by internal walls **30** of the respective devices **10-2** and **10-2'**. Also similar to the device **10-1**, the detector array **1** of each of the respective devices **10-2** and **10-2'** are preferably maintained within a detector case **12**,

3c. Exposure to in-band and out-of-band filtering by split image wedge configuration:

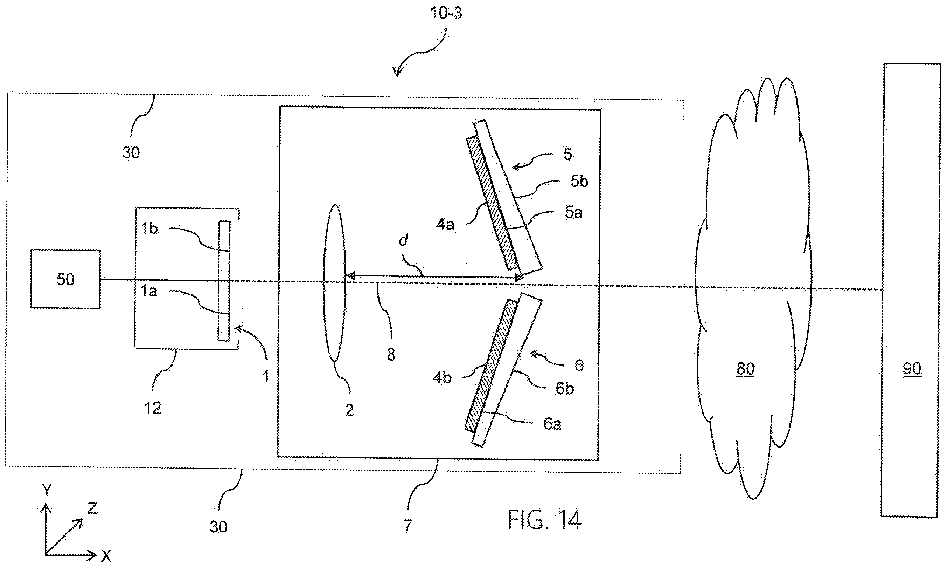

Figure 14 shows an embodiment of a device **10-3** that uses an optical configuration referred to as a "split image wedge" configuration. The object (scene **80** against the background **90**) on the right side is imaged on the detector plane through the two wedge-shaped components (**5** and **6**) and the objective lens **2**, so that two images of the scene **80** and the background **90** are formed on two halves of the surface of the detector array **1** (a first half **1a** and a second half **1b**), as shown in Figure 16. The scene **80** and the background **90** are imaged simultaneously on two halves of the detector plane, forming two identical images. The two images are formed through the two band pass filters centered at $w_G$ and $w_0$, respectively, implemented as coatings **4a** and **4b**, respectively, so that each scene pixel is measured through an in-band and an out-of-band filter by two different detector pixels at the same time.

The wedge shaped components **5** and **6** together with the objective lens **2** constitute collection optics **7.** Most preferably, the detector array **1** of the device **10-3** is a PbSe type array sensitive to radiation in the MWIR region of the electromagnetic spectrum.

The device **10-3** has the advantage that no filter movement is required and that the in-band and out-of-band signals are acquired at the same time. This may improve on potential drifts between the two signals due to gas cloud movement. The disadvantage is that the detector area is exploited for one half of the field of view that could be obtained with the same objective optics and without the wedges. Similar to the device **10-1** of Figure 8 and the devices **10-2** and **10-2'** of Figures 9A and 9B, respectively, the device **10-3** includes image acquisition electronics **50** for generating digital signals and for performing computations and algorithms for determining and/or indicating the presence or absence of the gas cloud path concentration distribution and/or name, as well as imaging and measuring the gas cloud path concentration distribution and/or flame.

The same infrared radiation from the scene **80** is imaged onto each of the two detector regions **1a** and **1b**, with each region of the detector imaging the scene **80** in a different wavelength range.

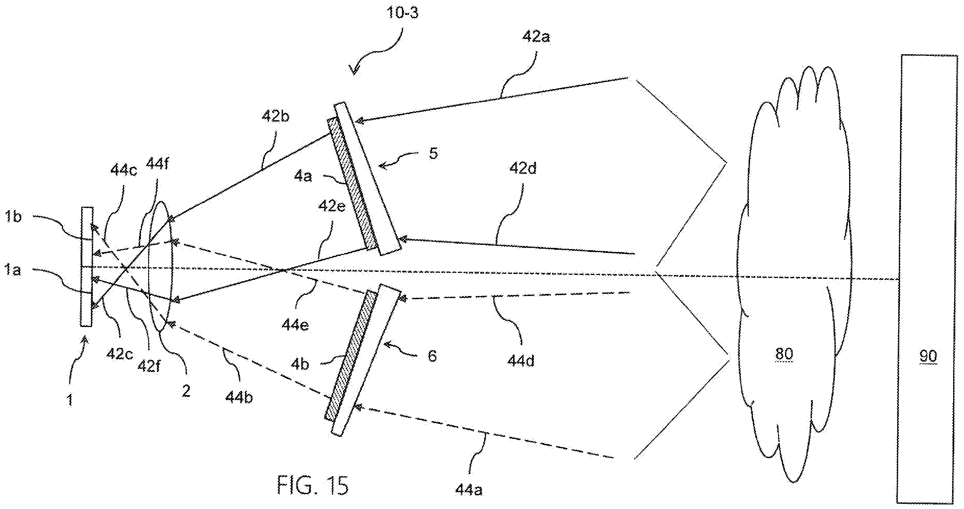

Figure 15 depicts the traversal of incident rays **42a-42f** and **44a-44f** from the scene **80** to the detector array **1**. The broken lines between the scene **80** and the device signifies that the distance between the scene **80** and the device as depicted in Figure 15 is not to scale. In general, the distance between the scene **80** and the device is much larger than the size of the device itself, and is typically on the order of tens or hundreds of meters. Additionally, the broken line signifies that the two bundles of rays **42a**, **42d** and **44a**, **44d** both originate from the entire scene and not from one half of the scene.

Note that although only four incident rays **42a**, **42d** and **44a**, **44d** are depicted in Figure 15 (these are the marginal rays which define the field of view of the device **10-3** in the plane of the cross section defined by the plane of the paper), it should be apparent that additional similar incident rays originating from the scene **80** are present and follow a path of traversal similar to the rays as described above. An exception is that ray components parallel to the plane of the page undergo deflection by the wedge, while the ones perpendicular to it do not undergo deflection. As such, reference to the incident rays **42a**, **42d** and **44a**, **44d** implicitly applies to all such similar incident rays originating from the scene **80** within the field of view.

The objective lens **2** focuses radiation on the detector array **1**, after having traversed the wedge-shaped components **5** and **6**, to form two simultaneous and separate images of the scene **80** with the background **90**, each image being formed on one half of the detector surface. As such, the radiation from the scene **80** and its background **90** is imaged separately and simultaneously onto the detector regions **1a** and **1b**.

The scene **80** with its background 90 is imaged by the device **10-3** with no moving parts while maintaining a high numerical aperture and low f-number (*f*/1.5 or less) at the detector array **1**. This is accomplished by positioning each of the first and second wedge-shaped components 5 and 6 at a minimum fixed distance *d* from the objective lens 2 along the optical axis of the device **10-3**. Positioning the wedge-shaped components 5 and 6 at a sufficiently large enough distance from the objective lens **2**, in combination with the above mentioned deflection angles, allows for the low f-number (high numerical aperture) at the detector array **1** to be maintained. This corresponds to high optical throughput of the device **10-3**, As a result, the same radiation from the scene is deflected by the wedge-shaped components **5** and **6** toward the objective lens **2** and imaged on the detector regions **1a** and **1b** through an f-number of the collection optics **7** which can be maintained close to 1 (*f*/1) without having to decrease the focal length *f* or increase the aperture diameter *D*. Accordingly, the minimum distance *d* which provides such high optical throughput can be approximately lower bounded by:

$$d > \frac{D}{2\tan\left(\frac{\theta}{2}\right)} \qquad (5)$$

where *D* is the aperture diameter of the objective lens and $\theta$ is the vertical field of view of the objective lens.

Having a large numerical aperture (low f-number) provides higher sensitivity of the detector array **1** to the radiation from the scene **80**, and less sensitivity to radiation originating from within the internal walls of the device **10-3**, the collection optics **7**, and the optical components themselves.

As a result of positioning the wedge-shaped components **5** and **6** at the distance *d*, the vertical fields of view of the wedge-shaped components **5** and **6** are approximately half of the above mentioned vertical field of view of the objective lens **2**.

The wedge-shaped components **5** and **6** are preferably positioned symmetrically about the optical axis, such that each is positioned at the same distance *d* from the objective lens **2,** and each is positioned at the same angle relative to the optical axis. Such a design ensures that the same amount of radiation is imaged on the detector regions **1a** and **1b** via the objective lens **2** from the wedge-shaped components **5** and **6**.

As previously mentioned, the radiation from the scene **80** which is imaged onto the first detector region **1a** only includes one of the wavelength ranges. The radiation from the scene **80** which is imaged onto the second detector region **1b** only includes the other one of the wavelength ranges. This is accomplished by positioning the filters **4a** and **4b** in the optical train.

In the exemplary implementation shown in Figures 14-16, the radiation from the scene **80** imaged on the first detector region **1a** only includes the in-band radiation from the gas filter **4a** (i.e., the filter centered at $w_G$), and the radiation from the scene **80** imaged on the second detector region **1b** only includes the in-band radiation from the flame filter **4b** (i.e., the filter centered at $w_0$). Accordingly, the first filter **4a** filters radiation in spectral ranges outside of the first wavelength range (i.e., stop band of the filter centered at $w_G$) and the second filter **4b** filters radiation in spectral ranges outside of the second wavelength range (i.e., stop band of the filter centered at $w_0$). Thus, the radiation from the scene **80** that is directed by the first wedge-sliaped component **5** to be imaged on the first detector region **1a** includes only the in-band radiation from the gas filter **4a**, and the radiation from the scene **80** that is directed by the second wedge-shaped component **6** to be imaged on the second detector region **1b** includes only the in-band radiation from the gas filter **4a.**

As previously mentioned, the surface of the detector array **1** is divided into the two aforementioned regions by a dividing plane **8** as shown in Figure 16. Figure 14 includes a non-limiting exemplary representation of the Cartesian coordinate system XYZ in which the detector plane is parallel to the YZ plane. Accordingly, the dividing plane 8 is parallel to the Z axis and the optical axis is parallel to the X-axis, The wedge-shaped components 5 and 6 are wedge-shaped in the XY plane.

In the embodiment of the device **10-3** shown in Figures 14 and 15, the filters 4a and 4b are not necessarily optical elements from the optics of the collection optics 7, but rather a coating on a first surface **5a** of the first wedge-shaped component **5** and a first surface 6a of the second wedge-shaped component **6,** respectively. The first surface **5a** is the surface of the first wedge-shaped component **5** which is closest to the objective lens **2.** Likewise, the first surface **6a** is the surface of the second wedge-shaped components **6** which is closest to the objective lens **2.**

Additionally, a second surface **5b** of the first wedge-shaped component **5** and a second surface **6b** of the second wedge-shaped component **6** may be coated with an antireflection coating, The second surfaces **5b** and **6b** are the respective surfaces of the wedge-shaped components **5** and **6** which are closest to the scene **80**. The antireflection coating provides increased sensitivity of the device to the radiation from the scene **80,**

Refer now to Figures 18A-18B and 19A. an alternative positioning of the filters **4a** and **4b**. Similar to the embodiment of Figures 14 and 15, the filters **4a** and **4b** are implemented as a coating, but in Figure 18A the coating is on the second surface **5b** of the first wedge-shaped component **5**. Similarly, in Figure **18B**, the coating is on the second surface **6b** of the second wedge-shaped component **6.** In Figure 19A the coating is on or near the first and second detector regions **1a** and **1b**. Specifically, the first filter **4a** is implemented as a coating on or near the first detector region **1a**, and the second filter **4b** is implemented as a coating on or near the second detector region **1b**.

Refer now to Figure 19B, an alternative implementation of the filters **4a** and **4b**. In Figure 19B, the filters **4a** and **4b** are implemented as stationary plates positioned in front of, or in direct abutment with, the respective detector regions **1a** and **1b**.

In the filter alternatives illustrated in Figures 18A and 18B, the first surfaces **5a** and **6a** may be coated with an antireflection coating. In the filter alternatives illustrated in Figures 19A and 19B, the first and second surfaces of both wedge-shaped components **5** and **6** are preferably coated with an antireflection coating. It is also noted that for clarity of illustration, the thickness of the coating and plates for implementing the filters **4a** and **4b** is greatly exaggerated in Figures 14, 15, 18A-1B and 19A-19B.

Similar to the devices **10-1, 10-2** and **10-2',** the components of the device **10-3** are positioned within a casing defined by internal walls **30** of the device **10-3**. Also similar to the devices **10-1, 10-2** and **10-2',** the detector array **1** is preferably maintained within a detector case **12**.

3d. Exposure to in-band and out-of-band filtering by split image mirror configuration:

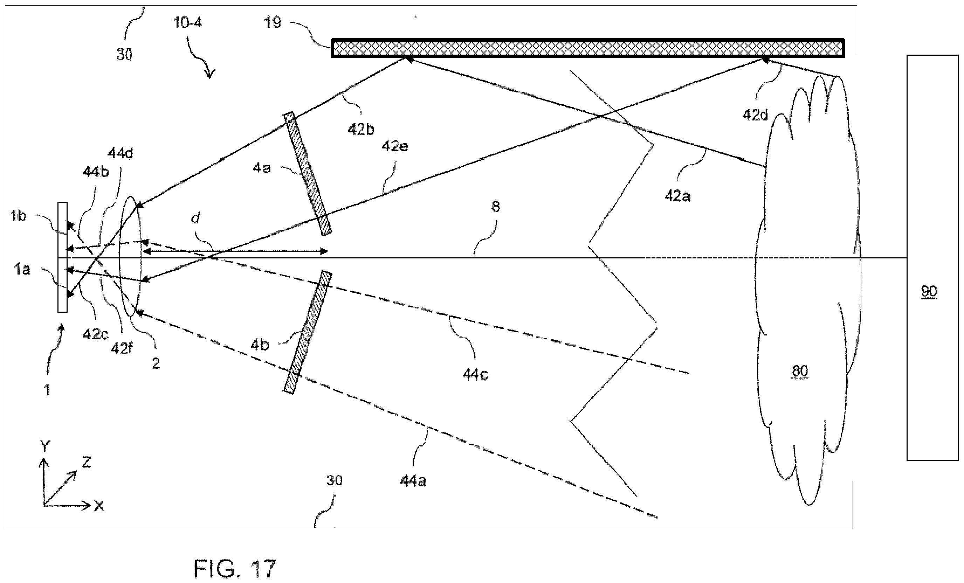

A similar result of the device **10-3** may be obtained by using a mirror **19** instead of the two wedge-shaped components **5** and **6** described in the previous section (Section 3c). Such a device **10-4** is shown schematically in Figure 17. In Figure 17, the mirror **19** is positioned with respect to the camera system (i.e., detector array 1) such that the reflective surface of the mirror **19** is perpendicular to the plane of the paper (XY plane) and parallel to the optical axis (X axis). Note that the same Cartesian coordinate system XYZ used in Figure 14 is also used in Figure 17. Although not shown in the drawings, the device **10-4** also includes image acquisition electronics **50** similar to the embodiments of the devices **10-1, 10-2** and **10-2',** and **10-3** for generating digital signals and for performing computations and algorithms for determining and/or indicating the presence or absence of the gas cloud path concentration distribution and/or flame, as well as imaging and measuring the gas cloud path concentration distribution and/or flame. Furthermore, although not shown in the drawings, the components of the device **10-4** are also positioned within a casing defined by internal walls of the device **10-4** and the detector array **1** is preferably maintained within a detector case, similar to the devices **10-1, 10-2** and **10-2'**, and **10-3**. Note that the objective lens **2** and the two filters **4a** and **4b** may be positioned in an optical casing (not shown) of the collection optics which is in turn positioned within the internal walls **30.**

Figure 17 additionally depicts the traversal of incident rays **42a-42f** and **44a-44d** from the scene **80** to the detector array **1,** similar to the depiction of the traversal of rays shown in Figure 15. The properties of the traversal of the rays depicted in Figure 17 is generally similar to the properties of the traversal of the rays depicted in Figure 15 unless expressly stated otherwise and will be understood by analogy thereto. Furthermore, the definitions of the field of view of the device **10-4** and the objective lens **2** of the device **10-4** are generally similar to the definitions provided with respect to the device **10-3** and will also be understood by analogy thereto.

The two filters **4a** and **4b** are placed either on planes where the two beam bundles are separated (i.e., at the minimum distance $d$ as a function of the aperture diameter of the objective lens and the vertical field of view of the objective lens disclosed in Section 3c and as shown in Figures 15 and 17), or directly covering each corresponding region of the detector, similar to the configuration depicted in Figures 19A and 19B.

By accordingly positioning the filters **4a** and **4b** as mentioned above, the device **10-4** maintains a low f-number ($f/1.5$ or less) at the detector array **1,** similar to that of the device **10-3.**

Note that a specific property of the traversal of the rays depicted in Figure 17 that is different from the traversal of the rays depicted in Figure 15 is lack of the additional reflected rays which pass through the second filter **4b.** Specifically, only the first bundle of rays **(42a** and **42d)** is reflected by the mirror **19** before passing through the first filter **4a** and the objective lens **2,** whereas the second bundle of rays **(44a** and **44c)** is not reflected at all and passes directly through the second filter **4b** and the objective lens **2.** In other words, the mirror **19** inverts the rays traversing the filter **4a** in a vertical upside down direction with respect to the ones of **4b** and as a result the two images of the scene **80** formed on the detector array **1** are upside down with respect to each other.

3e. Exposure to in-band and out-of-band filtering by specialized processing of the detector array:

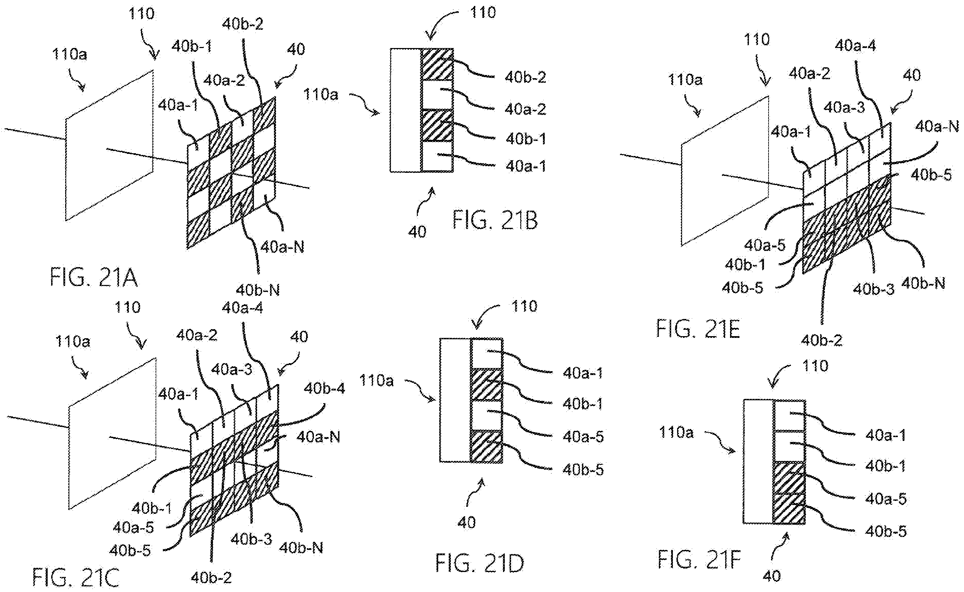

As described above, different optical and filtering configurations are presented for exposing the detector pixels to the two band pass filters centered at wavelengths $w_G$ and $w_0$. Among these configurations are pattern filtering techniques using a checkerboard pattern, or alternatively alternating rows or columns of the elements centered at $w_G$ and $w_0$. The filtering result may also be achieved by specialized processing during the manufacturing of the detector array. Figures 21A-21D depict several non-limiting implementations of an embodiment of such a detector array **110.** The detector array **110** is processed such that the detector surface that is sensitive to the scene radiation is deposited onto a pre-processed filter substrate **40.** For illustration purposes, the detector array **110** is depicted as including a surface **110a** that is sensitive to the scene radiation. The filter substrate **40** has the appropriate spectral characteristics of the two band pass filters centered at wavelengths $w_G$ and $w_0$. The filter substrate **40** is preferably pre-processed (i.e., manufactured) according to the patterns described in Section 3b. Specifically, the filter substrate **40** may be implemented in a checkerboard pattern (Figure 10), alternating rows of the elements centered at $w_G$ and $w_0$ (Figure 11), or alternating columns of the elements centered at $w_G$ and $w_0$ (not shown). Accordingly, each of the filter substrate elements **40a-1, 40a-2**, ..., **40a-N**, **41)b-1**, **40b-2**, ..., **40b-N** covers a respective elements of the detector array **110.**

The pre-processed filter substrate **40** may be manufactured according to any reasonable technique, such as, for example, the technique described in "Process Technology to Integrate Polycrystalline Uncooled PbSe Infrared Detectors on Interference Filters", by M.T. Rodrigo et al., SPIE Proceedings Vol. 5251, p. 97, 2004.

Figure 21A is an exploded view of the resulting detector surface **110a** deposited onto the pre-processed filter substrate **40** in which the filter substrate **40** has a checkerboard pattern. Figure 21B is a top view of the detector surface **110a** deposited onto the pre-processed filter substrate **40** in which the filter substrate **40** has a checkerboard.

Figure 21C is an exploded view of the resulting detector surface **110a** deposited onto the pre-processed filter substrate **40** in which the filter substrate **40** has alternating rows of the elements centered at $w_G$ and $w_0$. Figure 21D is a side view of the detector surface **110a** deposited onto the pre-processed filter substrate **40** in which the filter substrate **40** has alternating rows of the elements centered at $w_G$ and $w_0$.

Alternatively, the filter substrate **40** may be implemented such that the filter substrate **40** covers half of the detector array **110** uniformly with elements centered at $w_G$, and the other half of the surface of the detector array **110** uniformly with elements centered at $w_0$. In such an implementation, the detector array **110** can be considered as having two separate equally sized detector regions, similar to the detector arrays of the devices **10-3** and **10-4** previously described. As should be apparent, the two detector regions are effectively separated by the plane of the optical axis.

Figures 21E and 21F are an exploded view and side view of such an implementation, respectively. As in figures 21A-21D, the detector surface **110a** is deposited onto the pre-processed filter substrate **40.**

Note that in Figures 21A-21F, similar to Figures 10 and 11, the white squares **40a-1**, **40a-2**, ..., **40a-N** correspond to the filter elements centered at $w_G$ and the diagonally hatched squares **40b-1**, **40b-2**, ..., **40b-N** correspond to filter elements centered at $w_0$.

The detector array **110** implementation shown in Figures 21E and 21F is preferably used as a replacement for the detector array **1** and filters **4a** and **4b** of the split image configurations of the devices **10-3** (Section 3c) and **10-4** (Section 3d). The detector array **110** implementation shown in Figures 21A-21D is preferably used as a replacement for the detector array **1** and the patterned filter **4** of the device **10-2'** (Section 3b). It is also noted that for clarity of illustration, the thicknesses of the detector surfaces and the filter substrate are greatly exaggerated in Figures 21A-21F.

Note also that in the above described implementations of the detector array **110**, the filter substrate **40** should be deposited relative to the detector surface such that the filter substrate elements centered at $w_G$ and $w_0$ (**40a-1**, **40a-2**, ..., **40a-N**, **40b-1**, **40b-2**, ..., **40b-N**) match the shape, pitch and position of the respective detector elements.

In the non-limiting implementations of the embodiment of the detector array **110** illustrated in Figures 21A-21F, a total of 2N filter elements are depicted, with each wavelength region ($w_G$ and $w_0$) having N filter elements.

The above described non-limiting implementations of the detector array **110** embodiments require specially processed and manufactured filter substrates. Therefore, it may be desirable to avoid specialized manufacturing and the use of such filters altogether. Accordingly, the detector array may be manufactured such that roughly half of the individual detector elements (i.e., pixels) are sensitive to wavelengths $w_G$ and the other roughly half of the detector elements are sensitive to wavelengths $w_0$. In other words, the detector array is manufactured such that half of the detector pixels are sensitive to wavelengths in a spectral range corresponding to the in-band spectral range and the other half of the detector pixels are sensitive to wavelengths in a spectral range corresponding to the out-of-band spectral range. The two different sensitivities may be achieved, for example, by doping the semiconductor material of the detector array in two different stoichiometries. Note that additional processes may be carried out in addition to the doping in order to ensure that the two resultant spectral ranges have minimal or no spectral overlap.

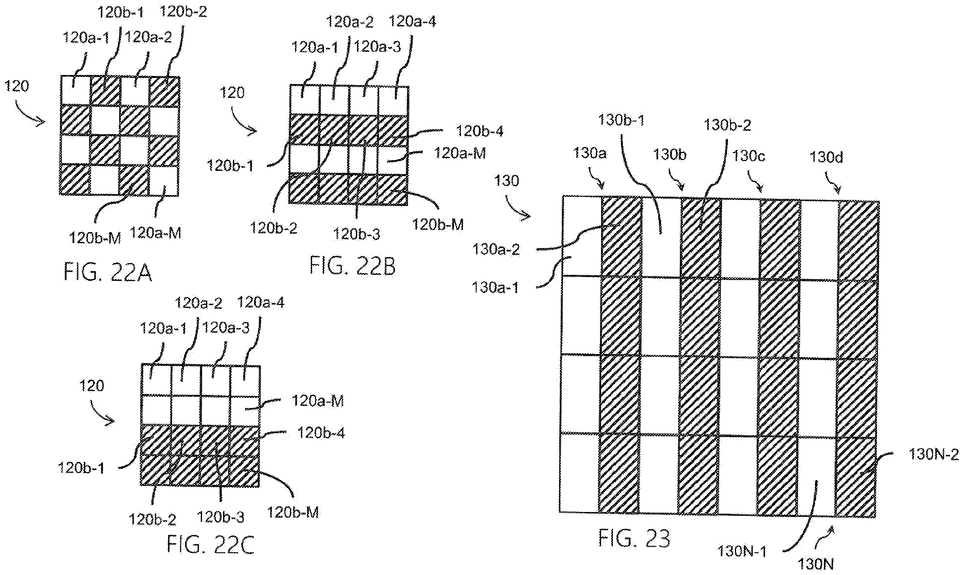

Figures 22A-22C depict several non-limiting implementations of an embodiment of a detector array **120** with half of the individual detector elements sensitive to wavelengths $w_G$ and the other half of the detector elements sensitive to wavelengths $w_0$. Similar to Figures 10 and 11, in such implementations the white squares represent the detector pixels that are doped to be sensitive to wavelengths $w_G$ (**120a-1**, **120a-2**, ..., **120a-M**), and the diagonally hatched squares represent the detector pixels that are doped to be sensitive to wavelengths $w_0$ (**120b-1**, **120b-2**, ..., **120b-M**).

The detector semiconductor material may be doped such that the resultant detector pixels are arranged in a checkerboard pattern (Figure 22A), alternating rows of detector pixels sensitive to $w_G$ and $w_0$ (Figure 22B), alternating columns of detector pixels sensitive to $w_G$ and $w_0$ (not shown), or with half of the detector pixels uniformly sensitive to $w_G$ and the other half of the detector pixels uniformly sensitive to $w_0$ (Figure 22C). Note that as in the implementation of Figures 21E and 21F, the implementation of Figure 22C is used as a replacement for the detector array **1** and filters **4a and 4b** of the split image configurations of the devices **10-3** (Section 3c) and **10-4** (Section 3c).

In the non-limiting implementations of the embodiment of the detector array **120** illustrated in Figures 22A-22C, a total of 2M detector pixels (i.e. detector elements) are depicted, with M of the detector pixels being sensitive to $w_G$ and M of the detector pixels being sensitive to $w_0$.

Alternatively, the detector array may be manufactured such that individual detector elements are sensitive to wavelengths in both $w_G$ and $w_0$. Refer to Figure 23, an embodiment of such a detector array **130**. The detector array **130** includes a plurality of detector elements **130a**, **130b**,..., **130N**. Each detector element includes two sub-elements (a first set of sub-elements **130a-1**, **130b-1**, ,..., **130N-1**, and a second set of detector sub-elements **130a-2**, **130b-2**, ,..., **130N-2**). The first set of detector sub-elements **130a-1**, **130b-1**, ,..., **130N-1** are sensitive to $w_G$, and the second set of detector sub-elements **130a-2**, **130b-2**, ,..., **130N-2** are sensitive to $w_0$. As shown in Figure 24, instead of the detector array being coupled to a single image acquisition electronics **50** as previously described, the detector array **130** of Figure 23 is coupled to two sets of image acquisition electronics (first image acquisition electronics **50a** and second image acquisition electronics **50b**). Specifically, the first image acquisition electronics **50a** is coupled to the first set of sub-elements **130a-1**, **130b-1**, ,..., **130N-1**, and the second image acquisition electronics **50b** is coupled to the second set of sub-elements **130a-2**, **130b-2**, ..., **130N-2**.

In the non-limiting example embodiments of the detector array **130** illustrated in Figure 23, a total of 2N detector sub-elements are depicted, with N of the detector sub-elements being sensitive to $w_G$ and N of the detector sub-elements being sensitive to $w_0$. Similar to Figures 10 and 11, the white detector sub-elements represent the detector sub-elements sensitive to $w_G$ (**130a-1**, **130b-1**, ,..., **130N-1**), and the diagonally hatched detector sub-elements represent the detector sub-elements that are sensitive to $w_0$ (**130a-2**, **130b-2**, ,...., **130N-2**).

Accordingly, the outputs of the individual detector elements are processed by the appropriate image acquisition electronics in order to generate and record signals corresponding to the detector elements (i.e., pixels) for imaging the scene **80**. As a result, the radiation from the scene that is imaged onto the detector array **130** can be reconstructed for both wavelength sensitivities $w_G$ and $w_0$.

As depicted in Figure 23, the detector sub-elements are shown as rectangular in shape, in which the sub-elements that are sensitive to $w_G$ are positioned to the left of the corresponding sub-element sensitive to $w_0$, relative to the detector plane. Note that although Figure 23 depicts the detector sub-element shapes as generally rectangular in the vertical direction relative to the detector plane, the detector sub-elements may also be generally rectangular in the horizontal direction relative to the detector plane. Accordingly, the detector sub-elements of a detector element may be generally rectangular in the vertical direction relative to the detector plane, while the detector sub-elements of a neighboring detector element may be generally rectangular in the horizontal direction relative to the detector plane.

Furthermore, the relative left-right vertical positioning of a single detector element may be different from the relative positioning of detector sub-elements of a neighboring detector element. For example, each detector element in an odd numbered row may have the detector sub-element sensitive to $w_G$ positioned to the left of the respective detector sub-element sensitive to $w_0$, and each detector element in an even numbered row may have the detector sub-element sensitive to $w_G$ positioned to the right of the respective detector sub-element sensitive to $w_0$. As such, a vertical rectangular checkerboard pattern may be formed. Similarly, if using detector sub-elements that are generally rectangular in the horizontal direction relative to the detector plane, the relative up-down horizontal positioning of a single detector element may be different from the relative positioning of detector sub-elements of a neighboring detector element in order to form a horizontal rectangular checkerboard pattern.

It is noted herein that different detector sub-element shapes can be used, so long as the two sets of detector sub-elements have different spectral responses (i.e., one set of sub-elements is sensitive to $w_G$ and the other set of sub-elements is sensitive to $w_0$). Preferably, the detector sub-elements of a single detector element are of approximately the same size in order to evenly partition a detector element into two detector sub-elements of approximately equal area. Also note that in practice there may be gaps between two sub-elements of a single detector element, however for clarity of illustration no gaps are shown in Figure 23.

It is noted herein that the term "detector sub-element" may also be interpreted in other words as "detector element region", "region of detector element", "detector element zone", and "zone of detector element". For example, the detector sub-elements **130a-1** and **130a-2** can also be referred to as a first region **130a-1** of the detector element **130a** and a second region **130a-2** of the detector element **130a.**

Note that the detector array **130** implementation of Figure 23 is preferably used as a replacement for the detector array **1** and the patterned filter **4** of the device **10-2'** (Section 3b), Also note that the description herein of the structure, components, and operation of each set of image acquisition electronics **50a** and **50b** is generally similar to that of the image acquisition electronics **50**, and will be understood by analogy thereto.

## 4. Drift correction:

For each of the embodiments of the devices **10-1**, **10-2**, **10-2'**, **10-3**, and **10-4** discussed above in Sections 3a-3d, as well as the variations of these embodiments when combined with the detector and filtering combinations discussed in Section 3e, changes in the environmental temperature surrounding these devices causes the emission of radiation originating from within the internal walls **30** of the device, the optical casing, and the optical components themselves to vary with time. This emission of radiation is referred to interchangeably as unwanted radiation. The unwanted radiation in turn leads to drifts in the imaged pixels signals, and erroneous results in the gas path concentration or flame measurement of each pixel of the image of the scene as measured by the devices according to appropriate algorithms.

In the subsequent sections of this description, variations of the devices **10-2** and **10-4** discussed in Sections 3a-3e will be presented in order to explain the drift correction methodology of the present disclosure. Each of the variations of these devices further operates to reduce the effect of the unwanted radiation in order to ensure accuracy of the imaging, detection and measurement functionality previously described. In other words, each of the variations of these devices is operative to allow compensation for the signal drift resulting from the unwanted radiation. Ideally, the signal drift reducing devices are operative to reduce the signal drift to a negligible amount essentially correcting for the effect of the drift, so that the device may provide accurate results. Accordingly, the terms "correcting for", "compensating for" and "reducing", when applied to drift in imaged pixels signals, are used interchangeably herein.

Note that although only variations of the devices **10-2** and **10-4** are presented, these serve as non-limiting examples for providing explanation as to the drift correction methodology of the present disclosure, and similar variations can be made to the devices **10-1**. **10-2'**, and **10-3** to achieve analogous results.

As will be discussed, the image acquisition electronics **50** of each device is further configured to apply a correction to the generated scene pixels signals in order to reduce the drift in the generated scene pixels signals caused by the radiation originating from within the internal walls **30**, the optical casing (i.e., collection optics), and the optical components themselves.

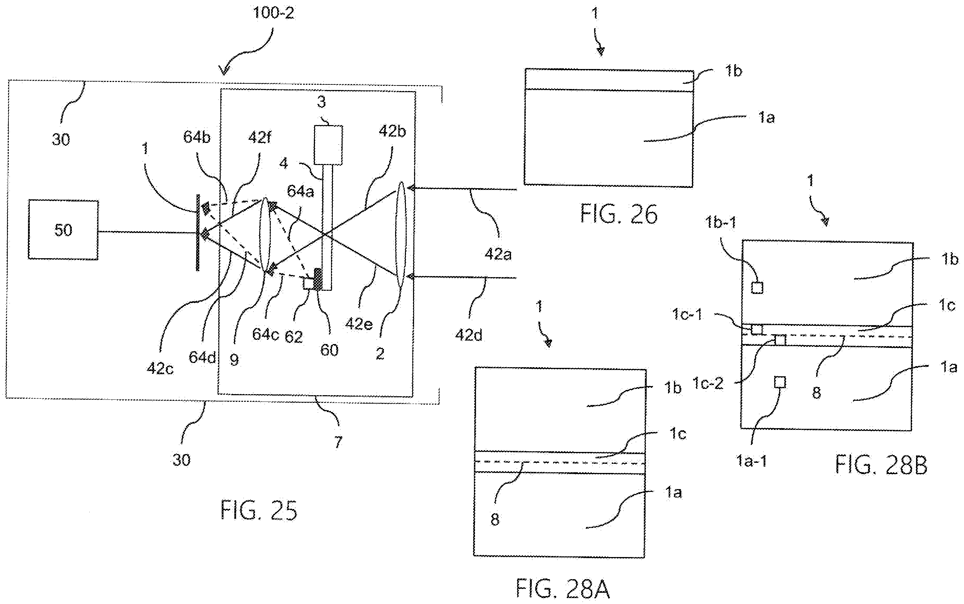

Refer now to Figure 25, a device **100-2** for reducing signal drift according to an embodiment of the present disclosure. As should be understood, the description of the structure and operation of the device **100-2** is generally similar to that of the device **10-2** unless expressly stated otherwise, and will be understood by analogy thereto. Two specific features of the device **100-2** are different from the device **10-2**. Firstly, the detector array 1 of the device **100-2** is partitioned into two separate detector regions (a first detector region **1a** and a second detector region **1b**). The area of the second detector region **1b** is significantly smaller or not usually larger than the area of the first detector region **1a** and can be visualized as a strip (or part of a strip, or a single pixel in the center or within region 1b) extending across the top or bottom of the detector plane (i.e., the surface of the detector array that is sensitive to the scene radiation).

Figure 26 is a front view of the detector **1** illustrating an implementation in which the second detector region **1b** is a strip extending across the top of the detector plane. The second detector region 1b can also be shaped as a square or shorter rectangle than as shown in Figure 26, and placed anywhere along the region shown in Figure 26.

Returning to Figure 25, the device **100-2** images the scene in the same way as the device **10-2** while projecting infrared radiation emitted by a surface **60** (e.g. a blackbody radiation source) onto the second detector region **1b**. As will be discussed in more detail in subsequent sections of the present disclosure, a temperature probe **62** is placed in proximity to, or within, the surface **60**. The surface **60** is stationary (contrary to the two alternating filters driven by the motor 3) and in good thermal contact with a portion of the filter **4**, and is in the vicinity of the optical components, so that the temperature of the surface **60** can be assumed to be at all times close to the temperature of the optics and follow closely the temperature of the device walls **30** and collection optics **7**, which in turn is affected by (and usually, especially when used in outdoor conditions, close to) the environment temperature. Note that alternatively, the surface **60** can be placed in good thermal contact directly with the device walls **30**. In other words, the signals of the detector elements of the second detector region **1b** do not carry information from the scene, but rather carry information on the self-emitted radiation of the internal walls **30** and collection optics **7** of the device. Therefore, the pixels signals of the second detector region **1b** can be used by the device **100-2** algorithms and electronics to correct for the unwanted changes to the signals of the first detector region **1a** that are caused by changing environment and not by the corresponding regions of scene. The pixels of the second detector region **1b** are referred to as "blind pixels". Additionally, a baffle or baffles may be positioned (if needed) to prevent radiation from the scene from reaching the second detector region **1b**.

The above explanation constitutes a second specific feature of the device **100-2** which is different from the device **10-2**, namely the inclusion of the blackbody radiation source **60** close to the optical elements and within the internal walls **30** of the device **100-2**. The blackbody radiation source **60** is positioned such that the blackbody radiation source **60** emits radiation which is projected only onto the second detector region **1b**, resulting in the blind pixels as previously mentioned to produce signals which, as will be discussed in more detail below, are used to reduce the drift in the signals from the scene, due to changing case and optics self-emission, The traversal of incident rays **64a-64d** from the blackbody radiation source **60** to the detector array **1** is shown in Figure 25. Also shown for completeness in Figure 25 is the traversal of incident rays **42a-42f** from the scene onto the detector array **1**. For clarity of illustration, the incident rays from the blackbody radiation source **60** are depicted with dashed arrows, whereas the incident rays from the scene are depicted with solid arrows.

The blackbody radiation source **60** can be placed in various positions within the device **100-2**. Preferably, the blackbody radiation source **60** is placed at an intermediate focal plane of the device **100-2** between the objective lens **2** and the re-imaging optical lens **9**, and most preferably in contact with the filter **4** or the filter holder. The placement of the blackbody radiation source **60** within the imaging device **100-2** is incumbent upon the radiation being projected onto only the second detector region **1b** to generate the blind pixels signals.

In the non-limiting implementation of the imaging device **100-2** shown in Figure 25, the blackbody radiation source **60** is positioned such that the radiation from the blackbody radiation source **60** is directed through the re-imaging optical lens **9** onto the second detector region **1b** which is located at the top of the detector plane. Note that in addition to the blackbody radiation source **60**, an additional blackbody radiation source can be placed in a symmetric position about the optical axis such that the radiation from the additional blackbody radiation source is projected through the re-imaging lens **9** onto a third detector region located at the bottom of the detector plane (i.e., as a strip or part of a strip in a symmetric position relative to the second detector region **1b**).

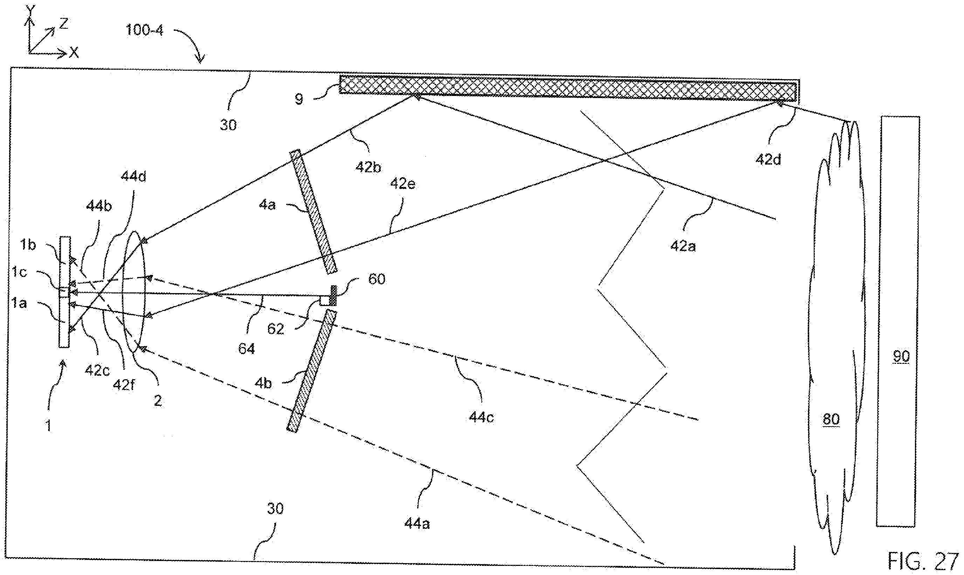

Refer now to Figure 27, a device **100-4** for reducing signal drift according to an embodiment of the present disclosure. As should be understood, the description of the structure and operation of the device **100-4** is generally similar to that of the device **10-4** unless expressly stated otherwise, and will be understood by analogy thereto. Similar to the device **100-2**, two specific features of the device **100-4** are different from the device **10-4**. Firstly, the detector array 1 of the device **100-4** is partitioned into three separate detector regions (a first detector region **1a**, a second detector region **1b**, and a third detector region **1c**). The area of the third detector region **1c** is significantly smaller or not usually larger than the areas of the other two detector regions and can be visualized as a strip extending across the center of the detector plane along the Z-axis (i.e., the surface of the detector array that is sensitive to the scene radiation).

Figure 28A is a front view of the detector **1** illustrating an implementation in which the third detector region **1c** is a strip extending across the center of the detector plane, and is a variation of the depiction of the detector array shown in Figure 16.

Returning to Figure 27, the device **100-4** images the scene in the same way as the device **10-4** while projecting infrared radiation emitted by a surface **60** (e.g. a blackbody radiation source) onto the third detector region **1c**. As will be discussed in more detail in subsequent sections of the present disclosure, a temperature probe **62** is placed in proximity to, or within, the surface **60**. The surface **60** is in good thermal contact with the collection optics of the device and is in the vicinity of the collection optics, so that, similar to the device **100-2**, the temperature of the surface **60** can be assumed to be at all times close to the temperature of the collection optics (i.e., objective lens **2** and filters 4a and 4b), and closely following the temperature of the device walls **30** which in turn is affected by (and usually, especially when used in outdoor conditions, close to) the environment temperature. In other words, the signals of the detector elements of the third detector region **1c** do not carry information from the scene, but rather carry information on the self-emitted radiation of the collection optics of the device and internal walls **30**. Therefore, the pixels signals of the third detector region **1c** can be used by the device **100-4** algorithms and electronics to correct for the unwanted changes to the signals of the detector regions **1a** and **1b** that are caused by changing environment and not by the corresponding regions of scene. Similar to the above description of the device **100-2**, the pixels of the third detector region **1c** are referred to as "blind pixels", and a baffle or baffles may be positioned (if needed) to prevent radiation from the scene from reaching the third detector region **1c**.

The above explanation constitutes a second specific feature of the device **100-4** which is different from the device **10-4**, namely the inclusion of the blackbody radiation source **60** within the collection optics of the imaging device **100-4**. The blackbody radiation source **60** is positioned along the optical axis between the two filters **4a** and **4b** such that the blackbody radiation source **60** emits radiation which is projected only onto the third detector region **1c**, resulting in the blind pixels as previously mentioned to produce signals which, as will be discussed in more detail below, are used to reduce the drift in the signals from the scene, due to changing case and optics self-emission.

Since the blackbody radiation source **60** is positioned along the optical axis between the two filters **4a** and **4b**, the main incident ray **64** from the blackbody radiation source **60** passes through the center of the objective lens **2** and is not defected by the objective lens **2**, allowing for the incident ray **64** to reach the center of the detector array **14** as shown in Figure 27.

The placement of the blackbody radiation source **60** within the imaging device **100-4** is incumbent upon the radiation being projected by the objective lens **2** onto only the third detector region **1e** to generate the blind pixels signals.

The methodology for reducing signal drift will now be presented with reference to both of the devices **100-2** and **100-4**. Throughout this section, the enumeration **100-X** is taken to refer to either or both of the devices **100-2** and **100-4**. In situations where a specific process step for signal drift correction is unique to one of the devices **100-2** or **100-4**, the enumeration of the specific device **100-2** or **100-4** will be used. The process of reducing and/or correcting for the drift in the generated scene pixels signals is applied to all scene pixels signals. For clarity, the process will be explained with reference to correcting for the drift in a single scene pixel signal as an example, and applied to all the other pixels in the same way.

The individual optical components, the optical casing (when present), and the spaces between the internal walls **30** of the device **100-X** are assumed to be at a temperature $T_E$, which is usually close to and affected by the temperature of the environment in which the device **100-X** operates. As a result, the amount of radiation originating from the individual optical components and the optical casing is a direct function of the temperature $T_E$.

Since the blackbody radiation source **60** or sources in the case of the device **100-2**) is placed within the device **100-X** and in good thermal contact with the device **100-X**, the optical components, optical casing and the walls **30**, the temperature of the blackbody radiation source **60** ($T_{BB}$) is assumed to be the same or a function of the temperature $T_E$ (i.e. $T_{BB}$ and $T_E$ are correlated). $T_{BB}$ can be measured by a temperature probe **62** placed in proximity to, or within, the blackbody radiation source **60**.

A measured scene pixel signal $S$ from a region of the scene, can be expressed as the sum of two signal terms, a first signal term $S_O$, and a second signal term $S_S$. The first signal term $S_O$ is the signal contribution to $S$ corresponding to the radiation originating from the optical components, the optical casing, and walls **30** of the device **100-X**, The second signal term $S_S$ is the signal contribution to $S$ due to the radiation originating from the corresponding region of the scene imaged on the pixel in question. Accordingly, the scene pixel signal $S$ is the result of the combination of radiation originating from the device walls **30** and environment, optical components and the optical casing, and radiation from the scene, being imaged onto the detector region(s) not associated with the blind pixels (i.e., the first detector region **1a** of the device **100-2**, and the two detector regions **1a** and **1b** of the device **100-4**).

Since the blackbody radiation source **60** is assumed to be at a temperature that is a direct function of the temperature $T_E$, the radiation emitted by the blackbody radiation source **60** is representative of the radiation originating from the optical components, the optical casing, the device walls **30** and environment. Accordingly, a blind pixel signal, $S_B$, may be assumed to be also a good representation of the contribution to the scene pixel signal due to the radiation originating from the environment, the optical components and the optical casing.

As a result of the radiation originating from the optical components and the optical casing being a direct function of the temperature $T_E$, the first signal term $S_O$ (if the above assumptions are correct) is also a direct function of the temperature $T_E$, This can be expressed mathematically as $S_O = f_1(T_E)$, where $f_1(\cdot)$ is a function.

Similarly, as a result of the blind pixel signal $S_B$ being assumed to be a good representation of the pixel signal contribution corresponding to the radiation originating from the optical components and the optical casing, the blind pixel signal $S_B$ can also be assumed to be a direct function of the walls **30**, the environment and optical system temperature $T_E$. This can be expressed mathematically as $S'_B = f_2(T_E)$, where $f_2(\cdot)$ is also a function.

Accordingly, since both the first signal term $S_O$ and the blind pixel signal $S_B$ are functions of the same operating temperature $T_E$, it is conceivable that a correlation may exist between the first signal term $S_O$ and the blind pixel signal $S_B$. With the knowledge of the correlation (if existing), the first signal term $S_O$ and the changes in time of $S_O$ (referred to hereinafter as "scene pixel signal drifts") can be determined from the blind pixel signal $S_B$ and the changes in time of $S_B$. Accordingly, in the above assumptions, the changes in time or drifts of the scene pixel signal $S$ due to environment status can be removed and corrected for, in order to prevent gas and/or flame quantity calculation errors.

In the context of this document, the term "correlation", when applied to a relationship between sets of variables or entities, generally refers to a one-to-one relationship between the sets of variables or entities. As such, a correlation between the first signal term $S_O$ and the blind pixel signal $S_B$ indicates a one-to-one relationship between the first signal term $S_O$ and the blind pixel signal $S_B$ at any temperature of the device **100-X**. This correlation is determined by a sequence of controlled measurements. The sequence of controlled measurements is performed prior to when the device **100-X** is in operation in the field, and can be considered as a calibration procedure or process to be performed in manufacturing of the device. For the purposes of this disclosure, the device **100-X** is considered to be in an operational stage when the radiation from the scene is imaged by the detector array **1** and the drift in the generated imaged pixels signals is actively reduced by the techniques as will later be described.

Recall the assumption that the blackbody radiation source **60** is at a temperature that is a direct function of the temperature $T_E$. According to this assumption, the blind pixel signal $S_B$ is assumed to be a good representation of the pixel signal contribution due to the radiation originating from the optical components and the optical casing. Prior to determining the correlation function between the first signal term $S_O$ and the blind pixel signal $S_B$, it is first necessary to verify the actuality of the above assumptions. Subsequent to the verification, the correlation function between the time changes of the first signal term $S_O$ (scene pixel signal drifts) and the blind pixel signal $S_B$ time changes can be determined. Both the verification process, and the process of determining the correlation function, is typically conducted through experiment. In practice, only drifts, or unwanted changes of the imaged pixel signals over time are to be corrected for, so the process of verification and determination of the correlations are only needed and performed between the differentials of $S_O$, $S_B$, or variations during time due to environment temperature variations.

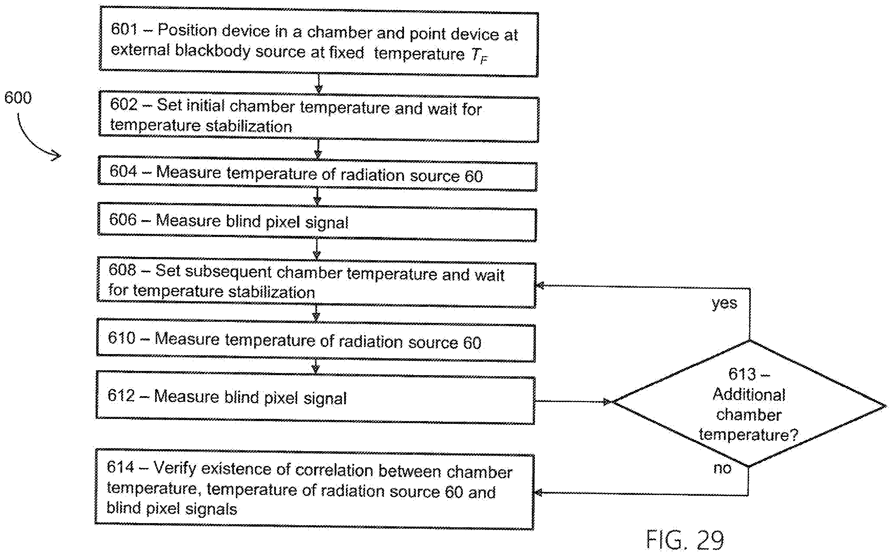

Refer now to Figure 29, a flowchart of a process **600** for verifying the existence of a correlation between the environment temperature, the temperature of the blackbody radiation source **60** (or sources in the case of the device **100-2**) and the blind pixel signal $S_B$. In step **601**, the device **100-X** is placed in a temperature controlled environment, such as a temperature chamber having a controllable and adjustable temperature, and to point the device **100-X** at an external blackbody source at a fixed temperature $T_F$ so that the scene pixels of the detector region(s) not associated with the blind pixels (i.e., the first detector region **1a** of the device **100-2**, and the two detector regions **1a** and **1b** of the device **100-4**) are exposed to unchanging radiation from the external blackbody. Such an external blackbody source is used in place of the scene. In step **602**, the temperature of the temperature chamber is set to an initial temperature $T_0$. The temperature of the temperature chamber and the imaging device **100-X** are let to stabilize to temperatures $T_0$ and $T_E$ respectively by allowing for an appropriate interval of time to pass.

Once the temperatures have stabilized, $T_{BB}$ (which may be practically equal to $T_E$) is measured via the temperature probe **62** in step **604**, In step **606**, the blind pixel signal $S_B$ is measured via the image acquisition electronics **50**. Accordingly, the blind pixel signal $S_B$ and $T_{BB}$ are measured at temperature $T_0$ in steps **604** and **606**, respectively.

In step **608**, the temperature of the temperature chamber is set to a different temperature $T_1$. Similar to step **602**, the temperatures of the temperature chamber and the device **100-X** are let to stabilize to temperature $T_1$ and a new temperature $T_E$, respectively, by allowing for an appropriate interval of time to pass. Once the temperatures have stabilized, $T_{BB}$ is measured via the temperature probe **62** in step **610**. In step **612**, the blind pixel signal $S_B$ is measured via the image acquisition electronics **50**. Accordingly, the blind pixel signal $S_B$ and $T_{BB}$ are measured at chamber temperature $T_1$ in steps **610** and **612**, respectively.

The process may continue over a range of chamber temperatures of interest, shown by the decision step **613**. For each selected chamber temperature, the blind pixel signal $S_B$ and $T_{BB}$ and $T_B$ are measured as in steps **604**, **606**, **610** and **612** above.

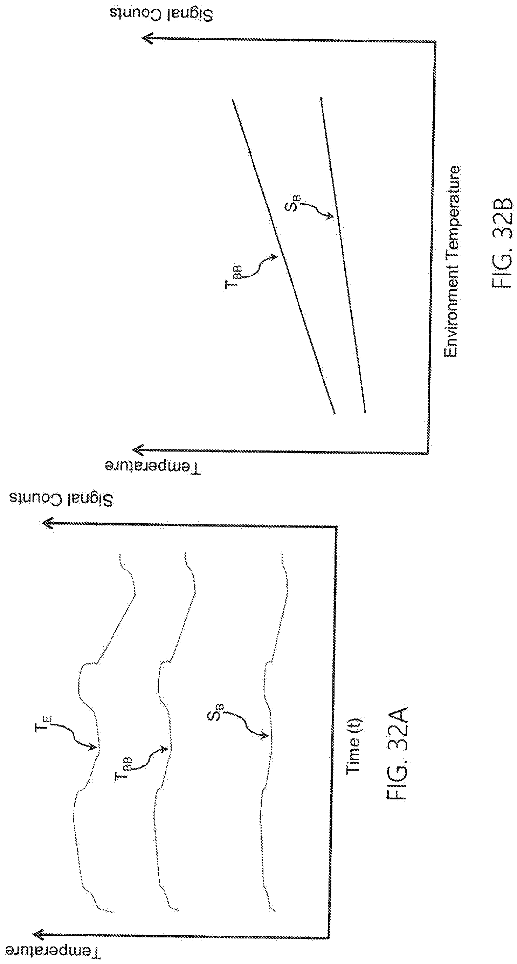

In step **614**, the existence of a correlation between the environment temperature, the blind pixel signal $S_B$ and the temperature of the blackbody radiation source **60** (or sources in the case of the device **100-2**) is verified by analyzing the resultant measurements, For example, the blind pixel signal $S_B$ measurements from steps **604** and **610** can be plotted as function of the operating temperatures $T_E$ established in steps **602** and **608**. Similarly, the $T_{BB}$ measurements from steps **606** and **612** can be plotted or otherwise visualized versus the range of operating temperatures $T_E$ established in steps **602** and **608**. An example of plots for executing step **614** is depicted in Figures 32A and 32B.

Referring first to Figure 32A, an example of plots of the measurements of the operating temperatures ($T_E$), the blind pixel signal ($S_B$), and the blackbody radiation source temperature ($T_{BB}$ measured via the temperature probe **62**) is depicted. The plots shown in Figure 32A are intended to serve as illustrative examples, and should not be taken as limiting in the scope or implementation of the process **600**.

Note that the x-axis in Figure 32A is designated as "time (*t*)", as should be apparent due to the variation of the operating temperatures ($T_E$) as time (*t*) goes by. Also note that the example plots shown in Figure 32A includes two y-axes. The first y-axis (shown on the left side of Figure 32A) is designated as "temperature" and corresponds to the operating temperatures ($T_E$) and the blackbody radiation source temperature ($T_{BB}$). The second y-axis (shown on the right side of Figure 32A), is designated as "signal counts" and is the measured output of the ADC **52** corresponding to the blind pixel signal ($S_B$).

If there is a linear (or any other one-to-one) relationship between the three entities $T_E$, $T_{BB}$, and $S_B$, the above discussed assumptions are upheld to be valid, and therefore there exists a correlation between the temperatures $T_E$, $T_{BB}$, and the blind pixel signal $S_B$.

Referring now to Figure 32B, the recognition of such a linear relationship can be shown by alternatively plotting the measurements depicted in Figure 32A. As should be apparent, the example plots shown in Figure 32B show the blackbody radiation source temperature ($T_{BB}$) and the blind pixel signal ($S_B$) signal counts versus the temperature $T_E$, which, as previously discussed, is the environment temperature. Accordingly, the x-axis in Figure 32B is designated as "environment temperature". As in Figure 32A. Figure 32B also includes two y-axes. The first y-axis (shown on the left side of Figure 32B) is designated as "temperature" and corresponds to the blackbody radiation source temperature ($T_{BB}$). The second y-axis (shown on the right side of Figure 32B), is designated as "signal counts" and is the measured output of the ADC **52** corresponding to the blind pixel signal ($S_B$).

Similar to the plots shown in Figure 32A, the plots shown in Figure 32B are intended to serve as illustrative examples, and should not be taken as limiting in the scope or implementation of the process **600**. As can be clearly seen in the illustrative example depicted in Figure 32B, a linear relationship of non-zero slope (which is an example of a one-to-one relationship) exists between the three entities $T_E$, $T_{BB}$, and $S_B$, thus implying that the three entities are correlated.

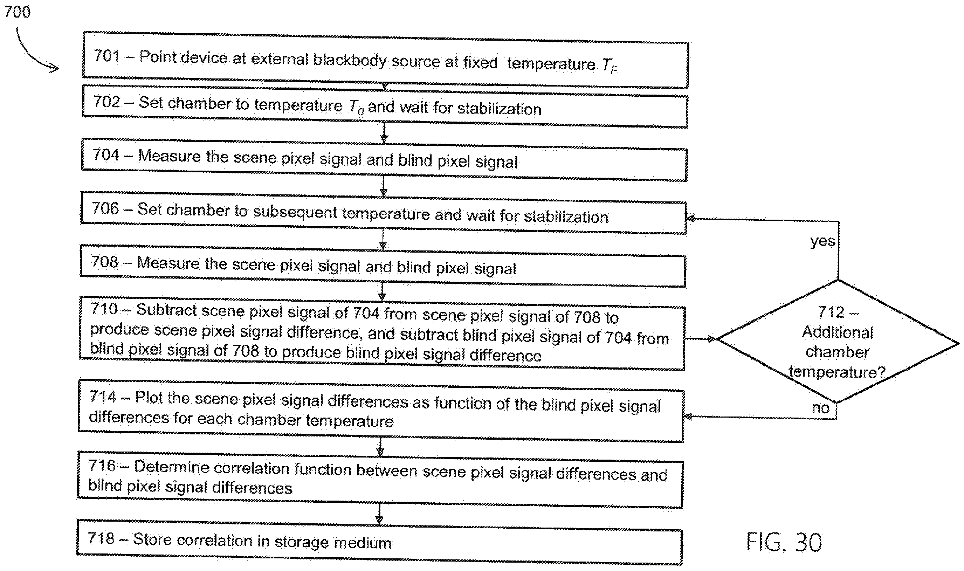

Refer now to Figure 30, a flowchart of a process **700** for determining a correlation between the drifts of scene pixels signals and the blind pixel signals $S_B$ changes due to changes in environment temperature. Similar to the process **600**, before performing the process **700**, the device **100-X** is placed in the temperature chamber. The device **100-X** is also pointed at a source of infrared radiation representing and simulating a scene during the operation of the device **100-X**, most conveniently a blackbody source at a known and fixed temperature. The blackbody may be positioned inside the temperature chamber or outside of the temperature chamber and measured by the device **100-X** through an infrared transparent window. In the process **700**, measurements of the scene pixel signal $S$ and the blind pixel signal $S_B$ are made via the image acquisition electronics **50**.

In step **701** (similar to step **601** above), the device **100-X** is retained in the temperature chamber and pointed at the external blackbody source which is set to a fixed temperature $T_E$. In step **702**, the temperature of the temperature chamber is set to an initial temperature $T_0$. The chamber and the device **100-X** are let to stabilize at temperature $T_0$ by waiting an appropriate period of time. In step **704**, the imaged pixel signal $S$ and the blind pixel signal $S_B$ are measured after the temperature of the device **100-X** reaches stabilization at $T_0$.

In step **706**, the temperature of the temperature chamber is set to a new temperature $T_1$, and the external blackbody is maintained at the temperature $T$. The chamber and the device **100-X** are let to stabilize at temperature $T_1$ by waiting an appropriate period of time. In step **708**, the scene pixel signal $S$ and the blind pixel signal $S_B$ are measured after the temperature of the device **100-X** reaches stabilization at $T_1$.

In step **710**, the imaged pixel signal $S$ measured in step **704** is subtracted from the imaged pixel signal $S$ measured in step **708**. The result of step **710** yields the temporal drift of the imaged pixel signal due to the change in the temperature of the temperature chamber. Also in step **710**, the blind pixel signal $S_B$ measured in step **704** is subtracted from the blind pixel signal $S_B$ measured in step **708.**

Similar to the process **600**, the process **700** may continue over a range of chamber temperatures of interest, shown by decision step **712**. For each newly selected chamber temperature (third, fourth, etc.), the imaged pixel signal $S$ measured in step **704** is subtracted from the imaged pixel signal $S$ measured at the presently selected temperature, and the blind pixel signal $S_B$ measured at step **704** is subtracted from the blind pixel signal $S_B$ measured at the same selected temperature. This procedure can be performed for all the temperatures within the required operating range of the imaging device.

In step **714**, the resultant differences in the scene pixels obtained in step **710** are plotted as function of the blind pixel differences obtained at each chamber temperature. In step **716**, the correlation function is determined by analyzing the results of the plot obtained in step **714**. Numerical methods, such as, for example, curve-fitting, least-squares, or other suitable methods, can be used to further facilitate the determination of the correlation function.

As should be apparent, the resulting correlation function can be interpolated and extrapolated to cover operating temperature ranges not measured during the execution of the processes **600** and **700**. In step **718**, the correlation function determined in step **716** is stored in a memory coupled to the processor **54**, such as, for example, the storage medium **56**.

Note that typical environment temperature variations used during the execution of the processes **600** and **700** may depend on various factors such as, for example, the location of the device **100-X** when in the operational stage and the intended specific use of the device **100-X** when in the operational stage. For example, when the device **100-X** is used for monitoring in industrial installations and facilities for gas leakages and/or flame presence, the temperature variations occurring during the execution of the processes **600** and **700** are typically in the range of tens of degrees.

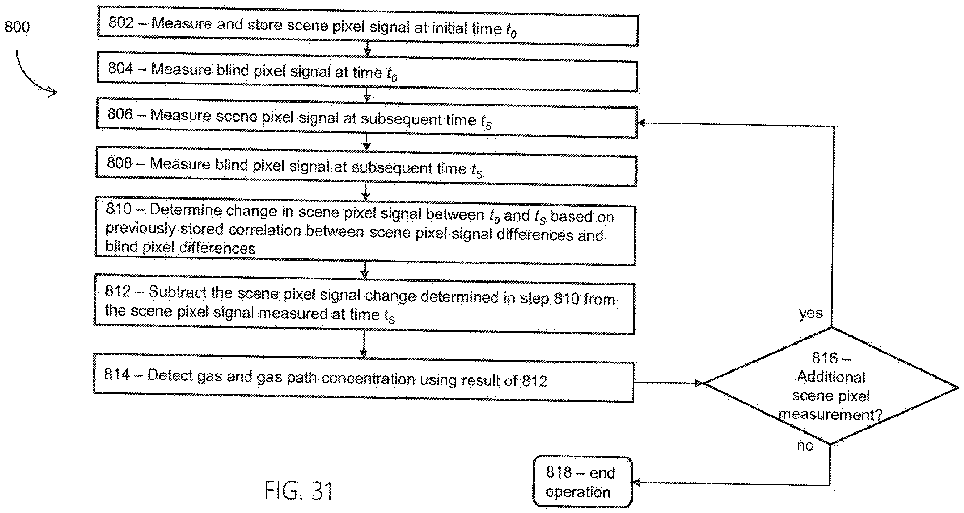

As a result of the correlation function determined by the process **700**, during the operation of the device **100-X**, signal drifts of the measured scene pixel signals can be compensated for in real time while the temperature of the environment changes. The process of compensating and/or correcting for the signal drifts during operation of the device **100-X** is detailed in Figure 31.

Refer now to Figure 31, a flowchart of a process **800** for correcting for the signal drifts in the imaged pixel signal $S$ caused by environment temperature changes, while the device **100-X** is operational in the field. In steps **802-814** the device **100-X** is operational in the field and monitors a scene in an industrial environment, automatically and without human intervention.

In step **802**, the scene pixel signal $S$ is measured and stored at an initial time $t_0$. The scene pixel measured at time $t_0$ may be stored in the storage medium **56** or stored in a temporary memory coupled to the processor **54**. In step **804**, the blind pixel signal $S_B$ is measured at the same initial time $t_0$. In step **806**, the scene pixel signal $S$ is measured at a subsequent time $t_S$ after the initial time $t_0$. In step **808**, the blind pixel signal $S_B$ is measured at the same subsequent time $t_S$.

In step **810**, the blind pixel signal $S_B$ measured in step **804** is subtracted from the blind pixel signal $S_B$ measured in step **808**. In step **810**, the drift of scene pixel signal that occurred between the measurement time $t_0$ and $t_S$ (due to change in the environment temperature) is determined from the correlation function of signal differences determined and stored in the procedure **700**. The determination of the drift of scene pixel signal in step **810** is accomplished by subtracting the blind pixel signal measured in step **804** from the blind pixel signal measured in step **808**. The resultant difference in blind pixel signal measurements is substituted into the correlation function of signal differences determined in the procedure **700** to determine the drift of scene pixel signal.

In step **812**, the scene pixel signal $S$ measured at step **806** is modified by subtracting from it the drift value determined in step **810**.

In step **814**, the scene pixel signal modified in step **812** is used to assess the presence or absence of the gas of interest and/or flame in the corresponding scene region, and to calculate the gas path concentration distribution if the gas is present, as well as imaging and measuring the gas cloud path concentration distribution and/or flame. As should be apparent, steps **806-814** can be repeated, as needed, for additional measurements by the device **100-X** of the scene pixel signals for the detection of the gas and/or flame and path concentration of the gas. This is shown by decision step **816**. Accordingly, if additional scene pixel signal measurements are needed, the process **800** returns to step **806** (at a new subsequent time $t_S$). If no additional scene pixel signal measurements are needed, the process ends at step **818**.

Note that as a result of the structure and operation of the device **100-X** when in the operational stage, the radiation from the blackbody source **60** (or sources in the case of the device **100-2**) is projected onto the detector region associated with the blind pixel (i.e., the second detector region **1b** of the device **100-2**, and the third detector region **1c** of the device **100-4**) continuously over the duration for which the radiation from the scene is focused onto the detector region(s) not associated with the blind pixels (i.e., the first detector region **1a** of the device **100-2**, and the two detector regions **1a** and **1b** of the device **100-4**). This is required by the process and results in the reduced frequency of shutter open and closing when in the operational stage, and in a more accurate determination and quantification of the relevant gas present in the scene.

Note that the blind pixel signal that is used to correct the drift in an imaged pixel signal is typically, and preferably, the blind pixel signal associated with the blind pixel that is positioned above or below the associated imaged pixel. In other words, the blind pixel signal used to correct the drift in an imaged pixel signal is preferably the blind pixel signal associated with the detector element closest in position to the detector element associated with the imaged pixel signal. For example, with respect to the device **100-4**, as shown in Figure 28B, the blind pixel **1c-1** is used to correct for the drift in imaged pixel **1b-1**. Likewise, the blind pixel **1c-2** is used to correct for the drift in imaged pixel **1a-1**. As should be understood, similar techniques can be used for the device **100-2**.

As mentioned above, the above described processes **600**, **700** and **800** were explained with reference to correcting for the drift in a single imaged pixel signal. As previously mentioned, the same processes may be performed for each of the imaged pixels signals, and may be performed in parallel. The process for correcting for the drift may be supplemented by known methods, such as, for example, NUC, in order to further reduce and correct for the effect of the signal drift. As a result of the drift correction via the processes **600**, **700** and **800** described above, the supplemental NUC method is performed at a reduced frequency. The frequency of operation of the supplemental NUC method is typically in the range of once per hour to once per day.

It will be appreciated that the above descriptions are intended only to serve as examples, and that many other embodiments are possible. The scope of the present invention is defined in the appended claims.

**Claims**

1. A device (10-3, 10-4) for imaging radiation from a scene (80), the radiation including at least a separate first and second wavelength region, **characterized in that** the device comprises:

   (a) a detector (1) of the radiation from the scene (80), the detector (1) being an array detector that includes a separate first and second detector region (1a, 1b), the first detector region (1a) including a first subset of detector pixels, and the second detector region (1b) including a second subset of detector pixels;
   (b) an image forming optical component (2) for forming an image of the scene (80) on the detector (1), the image forming optical component having a field of view;
   (c) a static filtering arrangement including a first and second filter (4a, 4b), each of the filters having a respective pass band and a respective stop band, and the first wavelength region being within the pass band of the first filter (4a) and the stop band of the second filter (4b), and the second wavelength region being within the pass band of the second filter (4b) and the stop band of the first filter (4a), wherein the first filter (4a) is associated with the first subset of detector pixels and wherein the second filter (4b) is associated with the second subset of detector pixels, and wherein the static filtering arrangement is positioned at a fixed distance from the image forming optical component greater than a minimum threshold distance that is determined by the formula

   $$\frac{D}{2\tan\left(\frac{\theta}{2}\right)},$$

   wherein D is the aperture diameter of the image forming optical component and $\theta$ is the field of view defined by the image forming optical component;
   (d) a radiation directing arrangement (5, 6, 19) for directing radiation from the scene (80) through the image forming optical component (2) and the static filtering arrangement onto the detector (1), the radiation directing arrangement (5, 6, 19) and the static filtering arrangement being deployed such that the radiation from the same scene is imaged separately and simultaneously onto the first and second subsets of detector pixels through an f-number of less than 1.5, and the imaged radiation on the first subset of detector pixels only including radiation in the first wavelength region and the imaged radiation on the second subset of detector pixels only including radiation in the second wavelength region, wherein the radiation directing arrangement (5, 6, 19) includes a reflective surface (19) positioned substantially parallel to the optical axis of the device (10-3, 10-4), or first and second substantially wedge-shaped components (5, 6) and the first and second wavelength regions are in the mid wave infrared region of the electromagnetic spectrum and the detector (1) is sensitive to radiation in the first and second wavelength regions; and
   (d) electronic circuitry (50) electronically coupled to the detector, the electronic circuitry configured to:

   (i) produce a pixel signal from each respective detector pixel, each of the pixel signals including information associated with the absorption or emission of radiation in one of the respective wavelength regions, and
   (ii) determine the presence of a material having spectral characteristics in one of the first or second wavelength regions based on the produced pixel signals.

2. The device (10-3, 10-4) of claim 1, wherein each of the first and second filters (4a, 4b) includes a plurality of filter elements (4a-1...4a-N, 4b-1...4b-N), the plurality of filter elements (4a-1...4a-N, 4b-1...4b-N) being arranged such that each filter element (4a-1...4a-N) of the plurality of filter elements of the first filter (4a) is adjacent to at least one respective filter element (4b-1...4b-N) of the plurality of filter elements of the second filter (4b).

3. The device (10-3, 10-4) of claim 1, wherein an indication of the presence of the material is based on the difference between the pixel signals produced from the first and second subsets of detector pixels.

4. The device (10-3, 10-4) of claim 1, wherein the pass band of the first filter (4a) is between 3.15 and 3.5 microns, and the pass band of the second filter (4b) is between 4.3 and 4.6 microns.

5. The device (10-3, 10-4) of claim 1, wherein the first filter (4a) is disposed on one of a first surface (5a) or a second surface (5b) of the first wedge-shaped component (5), and the second filter (4b) is disposed on one of a first surface (6a) or a second surface (6b) of the second wedge-shaped component (6).

6. The device (10-3, 10-4) of claim 5, wherein the first surface (5a) of the first wedge-shaped component (5) is a closest surface of the first wedge-shaped (5) component to the image forming optical component (2), and the first surface (6a) of the second wedge-shaped component (6) is a closest surface of the second wedge-shaped component (6) to the image forming optical component (2), and the second surface (5b) of the first wedge-shaped component (5) is a closest surface of the first wedge-shaped component (5) to the scene (80), and the second surface (6b) of the second wedge-shaped component (6) is a closest surface of the second wedge-shaped component (6) to the scene (80).

**7.** The device (10-3, 10-4) of claim 1, wherein the material includes at least one of a hydrocarbon gas cloud or a flame.

**8.** The device (10-3, 10-4) of claim 7, wherein the electronic circuitry (50) is further configured to:
(iii) if the hydrocarbon gas cloud is present, provide a measurement of the path concentration distribution of the hydrocarbon gas cloud based on at least a portion of the pixel signals.

**Patentansprüche**

**1.** Vorrichtung (10-3, 10-4) zum Abbilden einer Strahlung von einer Szene (80), wobei die Strahlung mindestens eine getrennte erste und zweite Wellenlängenregion umfasst, **dadurch gekennzeichnet, dass** die Vorrichtung umfasst:

(a) einen Detektor (1) für die Strahlung von der Szene (80), wobei der Detektor (1) ein Array-Detektor ist, der eine getrennte erste und zweite Detektorregion (1a, 1b) umfasst, wobei die erste Detektorregion (1a) eine erste Teilmenge von Detektorpixeln umfasst und die zweite Detektorregion (1b) eine zweite Teilmenge von Detektorpixeln umfasst;
(b) eine bilderzeugende optische Komponente (2) zum Erzeugen eines Bildes DER Szene (80) an dem Detektor (1), wobei die bilderzeugende optische Komponente ein Sehfeld aufweist;
(c) eine statische Filteranordnung, die ein erstes und zweites Filter (4a, 4b) umfasst, wobei jedes der Filter ein jeweiliges Durchlassband und ein jeweiliges Sperrband aufweist, und die erste Wellenlängenregion innerhalb des Durchlassbandes des ersten Filters (4a) und des Sperrbandes des zweiten Filters (4b) liegt und die zweite Wellenlängenregion innerhalb des Durchlassbandes des zweiten Filters (4b) und des Sperrbandes des ersten Filters (4a) liegt, wobei das erste Filter (4a) mit der ersten Teilmenge von Detektorpixeln verknüpft ist, und wobei das zweite Filter (4b) mit der zweiten Teilmenge von Detektorpixeln verknüpft ist, und wobei die statische Filteranordnung in einem festen Abstand von der bilderzeugenden optischen Komponente positioniert ist, der größer als ein Mindestschwellenabstand ist, der durch die Formel $\frac{D}{2tan\left(\frac{\theta}{2}\right)}$ bestimmt wird, wobei D der Blendendurchmesser der bilderzeugenden optischen Komponente ist und θ das Sehfeld ist, das durch die bilderzeugende optische Komponente definiert wird;
(d) eine Strahlungsrichtungsanordnung (5, 6, 19), um die Strahlung von der Szene (80) durch die bilderzeugende optische Komponente (2) und die statische Filteranordnung hindurch auf den Detektor (1) zu richten, wobei die Strahlungsrichtungsanordnung (5, 6, 19) und die statische Filteranordnung derart aufgestellt sind, dass die Strahlung von der gleichen Szene getrennt und gleichzeitig auf die ersten und zweiten Teilmengen von Detektorpixeln über eine Blendenzahl von weniger als 1,5 abgebildet wird, und die abgebildete Strahlung auf der ersten Teilmenge von Detektorpixeln nur eine Strahlung in der ersten Wellenlängenregion umfasst und die abgebildete Strahlung auf der zweiten Teilmenge von Detektorpixeln nur eine Strahlung in der zweiten Wellenlängenregion umfasst, wobei die Strahlungsrichtungsanordnung (5, 6, 19) eine reflektierende Oberfläche (19), die im Wesentlichen parallel zu der optischen Achse der Vorrichtung (10-3, 10-4) positioniert ist, oder erste und zweite im Wesentlichen keilförmige Komponenten (5, 6) umfasst, und sich die ersten und zweiten Wellenlängenregionen in einer Mittelwellen-Infratregion des elektromagnetischen Spektrums befinden, und der Detektor (1) auf eine Strahlung in den ersten und zweiten Wellenlängenregionen anspricht; und
(d) elektronische Schaltungen (50), die mit dem Detektor elektronisch gekoppelt sind, wobei die elektronischen Schaltungen konfiguriert sind zum:

(i) Erzeugen eines Pixelsignals aus jedem jeweiligen Detektorpixel, wobei jedes der Pixelsignale Informationen umfasst, die mit der Absorption oder Emission von Strahlung in einer der jeweiligen Wellenlängenregionen verknüpft sind, und
(ii) Bestimmen des Vorliegens eines Materials, das spektrale Eigenschaften in einer von den ersten oder zweiten Wellenlängenregionen aufweist, basierend auf den erzeugten Pixelsignalen.

**2.** Vorrichtung (10-3, 10-4) nach Anspruch 1, wobei jedes von den ersten und zweiten Filtern (4a, 4b) eine Vielzahl von Filterelementen (4a-1 ... 4a-N, 4b-1 ... 4b-N) umfasst, wobei die Vielzahl von Filterelementen (4a-1 ... 4a-N, 4b-1 ... 4b-N) derart angeordnet ist, dass jedes Filterelement (4a-1 ... 4a-N) der Vielzahl von Filterelementen des ersten Filters (4a) neben mindestens einem jeweiligen Filterelement (4b-1 ... 4b-N) der Vielzahl von Filterelementen des zweiten Filters (4b) liegt.

3. Vorrichtung (10-3, 10-4) nach Anspruch 1, wobei eine Angabe des Vorliegens des Materials auf der Differenz zwischen den Pixelsignalen, die von den ersten und zweiten Teilmengen von Detektorpixeln erzeugt werden, basiert.

4. Vorrichtung (10-3, 10-4) nach Anspruch 1, wobei das Durchlassband des ersten Filters (4a) zwischen 3,15 und 3,5 Mikrometer liegt, und das Durchlassband des zweiten Filters (4b) zwischen 4,3 und 4,6 Mikrometern liegt.

5. Vorrichtung (10-3, 10-4) nach Anspruch 1, wobei das erste Filter (4a) auf einer von einer ersten Oberfläche (5a) oder einer zweiten Oberfläche (5b) der ersten keilförmigen Komponente (5) angeordnet ist, und das zweite Filter (4b) auf einer von einer ersten Oberfläche (6a) oder einer zweiten Oberfläche (6b) der zweiten keilförmigen Komponente (6) angeordnet ist.

6. Vorrichtung (10-3, 10-4) nach Anspruch 5, wobei die erste Oberfläche (5a) der ersten keilförmigen Komponente (5) eine Oberfläche der ersten keilförmigen (5) Komponente ist, die der bilderzeugenden optischen Komponente (2) am nächsten ist, und die erste Oberfläche (6a) der zweiten keilförmigen Komponente (6) eine Oberfläche der zweiten keilförmigen Komponente (6) ist, die der bilderzeugenden optischen Komponente (2) am nächsten ist, und die zweite Oberfläche (5b) der ersten keilförmigen Komponente (5) eine Oberfläche der ersten keilförmigen Komponente (5) ist, die der Szene (80) am nächsten ist, und die zweite Oberfläche (6b) der zweiten keilförmigen Komponente (6) eine Oberfläche der zweiten keilförmigen Komponente (6) ist, die der Szene (80) am nächsten ist.

7. Vorrichtung (10-3, 10-4) nach Anspruch 1, wobei das Material mindestens eines von einer Wolke oder einer Flamme aus Kohlenwasserstoffgas umfasst.

8. Vorrichtung (10-3, 10-4) nach Anspruch 7, wobei die elektronischen Schaltungen (50) ferner konfiguriert sind zum: (iii) falls die Wolke aus Kohlenwasserstoffgas vorliegt, Bereitstellen einer Messung der Wegkonzentrationsverteilung der Wolke aus Kohlenwasserstoffgas basierend auf mindestens einem Teil der Pixelsignale.


**Revendications**

1. Dispositif (10-3, 10-4) pour l'imagerie d'un rayonnement provenant d'une scène (80), le rayonnement comprenant au moins des première et seconde régions de longueur d'onde séparées, **caractérisé par le fait que** le dispositif comprend :

    (a) un détecteur (1) du rayonnement provenant de la scène (80), le détecteur (1) étant un détecteur à réseau qui comprend des première et seconde régions de détecteur séparées (1a, 1b), la première région de détecteur (1a) comprenant un premier sous-ensemble de pixels de détecteur et la seconde région de détecteur (1b) comprenant un second sous-ensemble de pixels de détecteur ;
    (b) un composant optique de formation d'image (2) pour former une image de la scène (80) sur le détecteur (1), le composant optique de formation d'image ayant un champ de vision ;
    (c) un agencement de filtrage statique comprenant des premier et second filtres (4a, 4b), chacun des filtres ayant une bande passante respective et une bande atténuée respective, et la première région de longueur d'onde étant à l'intérieur de la bande passante du premier filtre (4a) et de la bande atténuée du second filtre (4b), et la seconde région de longueur d'onde étant à l'intérieur de la bande passante du second filtre (4b) et de la bande atténuée du premier filtre (4a), le premier filtre (4a) étant associé au premier sous-ensemble de pixels de détecteur et le second filtre (4b) étant associé au second sous-ensemble de pixels de détecteur, et l'agencement de filtrage statique étant positionné à une distance fixe du composant optique de formation d'image qui est supérieure à une distance de seuil minimale qui est déterminée par la formule $\frac{D}{2\tan\left(\frac{\theta}{2}\right)}$, D étant le diamètre d'ouverture du composant optique de formation d'image et $\theta$ étant le champ de vision défini par le composant optique de formation d'image ;
    (d) un agencement de direction de rayonnement (5, 6, 19) pour diriger un rayonnement provenant de la scène (80) à travers le composant optique de formation d'image (2) et l'agencement de filtrage statique sur le détecteur (1), l'agencement de direction de rayonnement (5, 6, 19) et l'agencement de filtrage statique étant déployés de telle sorte que le rayonnement provenant de la même scène est imagé séparément et simultanément sur les premier et second sous-ensembles de pixels de détecteur à travers un nombre d'ouverture de moins de 1,5, et le rayonnement imagé sur le premier sous-ensemble de pixels de détecteur comprenant uniquement un rayonnement dans la première région de longueur d'onde et le rayonnement imagé sur le second sous-ensemble de pixels de détecteur comprenant uniquement un rayonnement dans la seconde région de longueur d'onde, l'agencement de direction de rayonnement (5, 6, 19) comprenant une surface réfléchissante (19) positionnée sensiblement parallèle à l'axe optique du dispositif (10-3, 10-4), ou des premier et second composants sensiblement en forme de coin (5, 6) et les première et seconde régions de longueur d'onde étant dans la région de l'infrarouge moyen du spectre électromagnétique et le détecteur (1) étant sensible à un rayonnement dans les première et seconde régions de longueur d'onde ; et

(d) une circuiterie électronique (50) couplée électroniquement au détecteur, la circuiterie électronique étant configurée pour :

(i) produire un signal de pixel à partir de chaque pixel de détecteur respectif, chacun des signaux de pixel comprenant des informations associées à l'absorption ou l'émission de rayonnement dans l'une des régions de longueur d'onde respectives, et

(ii) déterminer la présence d'une matière ayant des caractéristiques spectrales dans l'une des première et seconde régions de longueur d'onde sur la base des signaux de pixel produits.

2. Dispositif (10-3, 10-4) selon la revendication 1, dans lequel chacun des premier et second filtres (4a, 4b) comprend une pluralité d'éléments de filtre (4a-1...4aN, 4b-1...4b-N), la pluralité d'éléments de filtre (4a-1...4a-N, 4b-1...4b-N) étant agencée de telle sorte que chaque élément de filtre (4a-1...4aN) de la pluralité d'éléments de filtre du premier filtre (4a) est adjacent à au moins un élément de filtre respectif (4b-1...4bN) de la pluralité d'éléments de filtre du second filtre (4b).

3. Dispositif (10-3, 10-4) selon la revendication 1, dans lequel une indication de la présence de la matière est basée sur la différence entre les signaux de pixel produits à partir des premier et second sous-ensembles de pixels de détecteur.

4. Dispositif (10-3, 10-4) selon la revendication 1, dans lequel la bande passante du premier filtre (4a) est entre 3,15 et 3,5 micromètres, et la bande passante du second filtre (4b) est entre 4,3 et 4,6 micromètres.

5. Dispositif (10-3, 10-4) selon la revendication 1, dans lequel le premier filtre (4a) est disposé sur l'une d'une première surface (5a) ou d'une seconde surface (5b) du premier composant en forme de coin (5), et le second filtre (4b) est disposé sur l'une d'une première surface (6a) ou d'une seconde surface (6b) du second composant en forme de coin (6).

6. Dispositif (10-3, 10-4) selon la revendication 5, dans lequel la première surface (5a) du premier composant en forme de coin (5) est une surface du premier composant en forme de coin (5) la plus proche du composant optique de formation d'image (2), et la première surface (6a) du second composant en forme de coin (6) est une surface du second composant en forme de coin (6) la plus proche du composant optique de formation d'image (2), et la seconde surface (5b) du premier composant en forme de coin (5) est une surface du premier composant en forme de coin (5) la plus proche de la scène (80), et la seconde surface (6b) du second composant en forme de coin (6) est une surface du second composant en forme de coin (6) la plus proche de la scène (80).

7. Dispositif (10-3, 10-4) selon la revendication 1, dans lequel la matière comprend au moins l'un d'un nuage de gaz d'hydrocarbures ou d'une flamme.

8. Dispositif (10-3, 10-4) selon la revendication 7, dans lequel la circuiterie électronique (50) est en outre configurée pour :
(iii) si le nuage de gaz d'hydrocarbures est présent, fournir une mesure de la distribution de concentration de trajet du nuage de gaz d'hydrocarbures sur la base au moins en partie des signaux de pixel.

**Methane absorptance of 1 (ppm) x (meter)**

FIG. 1

**Radiant intensity emission spectrum of solid flames**

— — Wood ——Cardboard

FIG. 5

Ethane absorptance of 1 (ppm) x (meter)

FIG. 2

Propane absorptance of 1 (ppm) x (meter)

FIG. 3

IR emission spectra of different burning liquid fuels

FIG. 4

n-Heptane normalized flame flicker frequency content in the CO2 band (4.3 to 4.7 μ)

FIG. 6

Hydrogen flame spectrum

FIG. 7

EP 3 271 696 B1

FIG. 8

FIG. 9A

FIG. 9B

EP 3 271 696 B1

FIG. 11

FIG. 10

EP 3 271 696 B1

FIG. 12

FIG. 13

FIG. 18A

FIG. 19A

FIG. 16

FIG. 18B

FIG. 19B

FIG. 14

FIG. 15

EP 3 271 696 B1

FIG. 17

EP 3 271 696 B1

EP 3 271 696 B1

Image Acquisition
Electronics
50

ADC
52

Processor
54

Storage Medium
56

Detector Array
1

**FIG. 20**

Image Acquisition
Electronics
50a

Detector Array
130

Image Acquisition
Electronics
50a

**FIG. 24**

FIG. 21A

FIG. 21B

FIG. 21C

FIG. 21D

FIG. 21E

FIG. 21F

FIG. 22A

FIG. 22B

FIG. 22C

FIG. 23

FIG. 26

FIG. 25

FIG. 28A

FIG. 28B

FIG. 27

EP 3 271 696 B1

601 – Position device in a chamber and point device at external blackbody source at fixed temperature $T_F$

602 – Set initial chamber temperature and wait for temperature stabilization

600

604 – Measure temperature of radiation source 60

606 – Measure blind pixel signal

608 – Set subsequent chamber temperature and wait for temperature stabilization

610 – Measure temperature of radiation source 60

612 – Measure blind pixel signal

613 – Additional chamber temperature?

yes

no

614 – Verify existence of correlation between chamber temperature, temperature of radiation source 60 and blind pixel signals

FIG. 29

700

701 – Point device at external blackbody source at fixed temperature $T_F$

702 – Set chamber to temperature $T_0$ and wait for stabilization

704 – Measure the scene pixel signal and blind pixel signal

706 – Set chamber to subsequent temperature and wait for stabilization

708 – Measure the scene pixel signal and blind pixel signal

710 – Subtract scene pixel signal of 704 from scene pixel signal of 708 to produce scene pixel signal difference, and subtract blind pixel signal of 704 from blind pixel signal of 708 to produce blind pixel signal difference

712 – Additional chamber temperature?

yes

no

714 – Plot the scene pixel signal differences as function of the blind pixel signal differences for each chamber temperature

716 – Determine correlation function between scene pixel signal differences and blind pixel signal differences

718 – Store correlation in storage medium

FIG. 30

800

802 – Measure and store scene pixel signal at initial time $t_0$

804 – Measure blind pixel signal at time $t_0$

806 – Measure scene pixel signal at subsequent time $t_S$

808 – Measure blind pixel signal at subsequent time $t_S$

810 – Determine change in scene pixel signal between $t_0$ and $t_S$ based on previously stored correlation between scene pixel signal differences and blind pixel differences

812 – Subtract the scene pixel signal change determined in step 810 from the scene pixel signal measured at time $t_S$

814 – Detect gas and gas path concentration using result of 812

816 – Additional scene pixel measurement?

yes

no

818 – end operation

FIG. 31

Signal Counts

Temperature

$T_{BB}$

$S_B$

Environment Temperature

FIG. 32B

Signal Counts

Temperature

$T_E$

$T_{BB}$

$S_B$

Time (t)

FIG. 32A

## REFERENCES CITED IN THE DESCRIPTION

**Patent documents cited in the description**

- US 98357015 A
- US 62135183
- US 949906
- US 94990915

- US 20050156111 A, Racca
- US 20060206190 A, Wood
- US 8124936 B, Lagna
- EP 0973109 A, Porter

**Non-patent literature cited in the description**

- **M.T. RODRIGO et al.** Process Technology to Integrate Polycrystalline Uncooled PbSe Infrared Detectors on Interference Filters. *SPIE Proceedings,* 2004, vol. 5251, 97